# EUROPÄISCHE PATENTSCHRIFT

(11) **EP 0 973 835 B1**
(45) Veröffentlichungstag und Bekanntmachung des Hinweises auf die Patenterteilung: **27.11.2002**
(21) Anmeldenummer: 98924092.4
(22) Anmeldetag: 01.04.1998
(51) Int. Cl.: C09D 4/06, C08F 265/06, C09D 4/00, C08F 220/12, C08F 2/44, A47K 3/00, B32B 27/00, B05D 7/02

(54) **HINTERFÜTTERTER SANITÄRARTIKEL UND VERFAHREN ZU DESSEN HERSTELLUNG**
SANITARY APPLIANCES WITH A CASING
APPAREILS SANITAIRES

(30) Priorität: 08.04.1997 DE 19714399
(43) Veröffentlichungstag der Anmeldung: 26.01.2000
(73) Patentinhaber: Röhm GmbH & Co. KG, 64293 Darmstadt (DE)
(72) Erfinder: JAECKEL, Rüdiger, D-63505 Langenselbold (DE); RITZERT, Hans, Josef, D-63505 Langenselbold (DE); SCHRÖDER, Axel, D-63456 Hanau (DE); DEBES, Ralf, D-63829 Krombach-Oberschur (DE); SEELMANN, Peter, A-1238 Wien (AT)
(86) Internationale Anmeldenummer: EP9801881
(87) Internationale Veröffentlichungsnummer: WO98045375

(56) Entgegenhaltungen:
- EP-A- 0 693 503
- EP-A- 0 753 402

## Beschreibung

Die Erfindung betrifft hinterfütterte Sanitärartikel gemäß dem Oberbegriff des Anspruchs 1 sowie ein Verfahren zur Herstellung solcher Sanitärartikel.

Insbesondere bezieht sich die Erfindung auf Bade- oder Duschwannen bzw. Spülbecken, die ein vorzugsweise tiefgezogenes Acrylglasformteil aufweisen, das an seiner Rückseite mit glasfaser- und asbestfreiem, 1,5 bis 10 mm dickem Polymermaterial verstärkt ist, welches ohne zusätzliche Haftvermittler fest mit dem Acrylglasformteil verbunden ist, wobei diese Verstärkung durch Polymerisation eines (Meth)acrylatsystems erhältlich ist.

Zum näheren Stand der Technik werden folgende Druckschriften genannt:
- D1 =: Patent Abstracts of Japan, unexamined applications, Sektion M, Band 17, Nr.694, 17. Dezember 1993, The Patent Office Japanese Government Seite 45 M 1531; & JP-A-05 237 854;
- D2 =: DE 36 44 111 A1;
- D3 =: FR 2 640 909;
- D4 =: EP-A-0 693 503;
- D5 =: EP-A-0 285 046;
- D6 =: EP-A-0 345 581;

Verstärkte Acrylglasformteile als Wannen oder Becken im Sanitärbereich sind grundsätzlich bekannt. So beschreibt die japanische Offenlegungsschrift JP-A 05-237854 der Mitsubishi Rayon ( = D1 ) ein Herstellungsverfahren, bei dem eine gefüllte Harzmischung in einen Spalt zwischen Formwerkzeug und tiefgezogenem Acrylglasformteil eingefüllt und dann in Kontakt mit dem Formteil befindlich integral ausgehärtet wird. Beispielhaft wird als gefüllte Harzmischung eine Mischung aus 90 Gew.-Teilen eines Prepolymerisats eines methacrylischen Esters und 10 Gew.-Teilen eines Methacrylatmonomeren mit 60 Gew.-% Aluminiumhydroxid verwendet. Diese Mischung wird zusammen mit Initiator und Vernetzer in einen 8 mm starken Spalt zwischen dem vorgeformten Acrylglasteil und dem Formwerkzeug gegossen. Die Mischung im Spalt läßt man dann 4 h lang härten, wobei die Oberfläche des Spalts zwischen der Form und dem Formteil mit einer Polyesterfolie bedeckt wird.

Als Füllstoffe für die einzugießende Harzmischung werden neben Aluminiumhydroxid weiterhin Calciumcarbonat, Glasfasern oder Carbonfasern vorgeschlagen.

Obwohl gemäß dem in der angesprochenen japanischen Offenlegungsschrift D1 vorgeschlagenen Gießverfahren laminierte Verbundkörper, insbesondere Bade- oder Duschwannen oder auch Abflußbecken erhältlich sind, die hinsichtlich der Haftung der Verstärkungsschicht mit dem tiefgezogenen Acrylglasformteil der Basis sowie hinsichtlich der Festigkeit des gesamten Verbundkörpers über durchaus befriedigende Eigenschaften verfügen, sind sowohl das Formteil als auch das Verfahren zu seiner Herstellung in wenigstens zweierlei Hinsicht besonders nachteilig.

Zum einen ist zur Herstellung des hinterfütterten Formteils immer ein zweites Formwerkzeug nötig, bei dem das zum Gießen der Verstärkungsmasse erforderliche Volumen mit berücksichtigt werden muß.

Zum anderen ist nur eine relativ dicke Hinterfütterung des tiefgezogenen Formteils (im vorgenannten Beispiel 8 mm) möglich, da es bei einem Gießverfahren leicht zu größeren Dickeunterschieden kommen kann, welche bei zu geringen Hinterfütterungsstärken, wie sie aufgrund von Materialverbrauch und Gewichtsersparnis durchaus erstrebenswert wären, nicht mehr tolerierbar ist.

Aus der D2 ( = DE 36 44 111 A1 ) ist ein Verfahren zur Herstellung einer mit Kunststoff verstärkten Badewanne bekannt, bei dem eine Wanne, die im Tiefziehverfahren aus Acrylglas gefertigt wurde, mit einer auf die Außenseite aufgespritzten glasfaserverstärkten Polyesterharzschicht verstärkt wird. Sowohl die Faserverstärkung als auch die Hinterfütterung mit Polyestermaterial stehen jedoch einer einfachen und im wesentlichen vollständigen Recyclierbarkeit gebrauchter Formteile entgegen, ja machen diese geradezu unmöglich.

Die FR 2 640 909 ( = D3 ) betrifft ein Sandwich-Bauteil für den Sanitärbereich aus thermoplastischem Harz (z. B. PMMA) und einer auf die Bauteilform des thermoplastischen Harzteils vorgeformten Glasfasermatte. Verbunden werden diese Teile in einem Formwerkzeug durch Einspritzen einer sirupösen Polyesterformulierung zwischen die vorgeformten Acryl- und Faserteile. Die Möglichkeit der Verwendung eines Acrylharzes wird auch erwähnt. Ebenso wie bei der D2 ist der Einsatz von Glasfasern, sei es nun in Form einer Matte oder von Häckseln eines Rovings, als prohibitiv für eine Wiederaufarbeitung von gebrauchten Formteilen zu betrachten. Außerdem handelt es sich bei dem durch die D3 nahegelegten Verfahren in keinem Fall um ein Sprühverfahren, sondern vielmehr um ein Injektions-(Spritz-) verfahren, welches ebenso aufwendig und unvorteilhaft ist wie das Gießverfahren der D1. Es werden mehrere Arbeitsschritte, mehrere Personen, mehrere Formen sowie Nachbearbeitungsschritte benötigt, um zu einem Produkt zu kommen.

Verstärkte Sanitärartikel, die ein tiefgezogenes Acrylglasformteil aufweisen, das an seiner Rückseite mit einer Schicht eines faserhaltigen Polymermaterials verstärkt ist, welches ohne zusätzliche Haftvermittler fest mit dem Acrylglasformteil verbunden ist, sind auch aus der EP-A-0 693 503 ( = D4 ) bekannt.

Diese hinterfütterten Sanitärartikel kennzeichnen sich dadurch, daß die Verstärkungsschicht 1 bis 5 mm dick ist und durch Aushärtung eines auf die Rückseite des Acrylglasformteils aufgesprühten, polymerisierbaren, kalthärtenden, reaktiven (Meth)acrylat-Systems erhältlich ist. Das (Meth)acrylat-System enthält dabei als essentielle Bestandteile neben den polymerisierbaren Bestandteilen ein Redoxsystem, Feinfüllstoffe sowie zur Verstärkung 10 - 50 Gewichtsprozent Glasfaserhäcksel.

Ein Vorteil des bekannten hinterfütterten Sanitärartikels soll nun darin bestehen, daß seine Wiederaufarbeitung durch Depolymerisation - eine dem enstprechende, geeignete Auswahl der Feinfüllstoffe vorausgesetzt - problemlos möglich sein soll. Dies trifft zwar im Hinblick auf die der D4 entnehmbaren Feinfüllstoffe uneingeschränkt zu, die in großen Mengen zur Verstärkung benötigten Glasfaserhäcksel sind jedoch bei der Depolymerisation nicht unproblematisch, was leider durch umfangreiche Ergebnisse aus der Praxis bestätigt wird. Man kann zwar theoretisch davon ausgehen, daß die Häcksel aus gebrauchten Teilen sich auf der Oberfläche des zur Depolymerisation benötigten Metallbades sammeln und mit einem Schieber oder Rakel abgeschöpft werden können, es hat sich jedoch gezeigt, daß die Häcksel in nicht zu vernachlässigendem Maße im Metallbad verbleiben und nicht ohne weiteres abgetrennt werden können. Hinzu kommt, daß die Glasfaserhäcksel grundsätzlich bezüglich der Arbeitssicherheit ähnlich wie Asbestfasern zu beurteilen sind. Eine gesundheitliche Gefährdung des Bedienpersonals durch bei der Depolymerisation teilweise in Form von Staub anfallender Glasfaserhäcksel ist nicht ohne weiteres auszuschließen. Ein Verzicht auf derlei Faserfüllstoffe wäre demnach a priori sehr erstrebenswert.

Daneben neigen die den Verstärkungsschichten aus dem Stand der Technik zugrunde liegenden (Meth)acrylat-Systeme zumindest teilweise zu Härtungsstörungen, beispielsweise Lufteinschlüssen etc. Die zur Verstärkung essentiellen Glasfaserhäcksel stehen ab, was meint, daß die einige Zentimeter langen Fasern nach dem Aufsprühen nicht plan auf der Rückseite des Formteils aufliegen, sonder daß es bei Ausbildung des Gewirrs innerhalb des Verstärkungsmaterials zu einem mehr oder minder starken Hervorstehen der Fasern aus der Formteilebene kommt. Somit ist ein Anrollen zum Ausgleich der Härtungsstörungen und Anpressen der Faserverstärkungen unumgänglich. Dieses händische nachbearbeiten - also die Nachbearbeitung von Hand - ist aufwendig und verteuert das Produkt.

Obwohl man den Eindruck gewinnen könnte, daß die in der D4 offenbarten Herstellvarianten auch ohne Glasfaserverstärkung auskommen könnten, dokumentiert die D4 durch alle Beispielen die Notwendigkeit von Glasfaserverstärkungen. Daneben wird die Komponente G) gemäß der D4 als essentieller Bestandteil der Verstärkungsschicht bezeichnet. Ein essentieller Bestandteil kann jedoch nicht einfach weggelassen werden, ohne den Erfolg der technischen Lehre in Frage zu stellen. Dies ist ein eindeutiges Indiz dafür, daß die technische Lehre der D4 keine von Glasfasern freien Verstärkungsschichten mitumfaßt und somit dem Fachmann keine entsprechende Lösung offenbart und zugänglich gemacht wird. Es besteht also immer noch das ungelöste Problem der vollständig recyclierbaren, hinterfütterten Sanitärartikel, die frei von Glasfaserhäcksel und Polyesterharz sind und daraus resultierend selbstverständlich ein gesteigerter Bedarf nach solchen Artikeln.

Die D5 und die D6 offenbaren in Bezug auf den Gegenstand der vorliegenden Anmeldung lediglich technologischen Hintergrund. Die D5 bezieht sich dabei auf ein Gießverfahren, bei dem Sanitärartikel verstärkt werden, wobei PMMA Verwendung findet, welches mit Mikrofüllkörpern, z. B. aus Glasabfällen, gefüllt ist.

Angesichts des hierin genannten und ausführlich diskutierten Standes der Technik war es eine Aufgabe der Erfindung, glasfaserhäckselfrei und asbestfrei verstärkte Sanitärartikel bereitzustellen.

Weiterhin ist die Schaffung vollständig recyclierbarer Sanitärartikel, die auf Acrylglasformteilen basieren, die Aufgabe der Erfindung gewesen.

Noch eine Aufgabe der Erfindung ist die Bereitstellung vollständig recyclierbarer hinterfütterter Acrylglasformteile, die insbesondere unter Einsatz der an sich für Acrylglas bekannten Depolymerisationstechnik mittels Metallbädern, vollständig und möglichst ohne Gefährdung des Bedienpersonals recyclierbar sind.

Eine weitere Aufgabe der Erfindung ist darin zu sehen, hinterfütterte Sanitärartikel zur Verfügung zu stellen, die bei möglichst hoher Materialersparnis den allgemeinen Anforderungen genügen, wie sie im Hinblick auf die Stabilität an Sanitärartikel gestellt werden.

Dabei war es unter anderem auch Aufgabe der Erfindung, Sanitärartikel mit ausreichender Dauerhaftigkeit der Verstärkungsschicht auch und insbesondere ohne zusätzlichen Haftvermittler bereitzustellen.

Auch soll die Bildung von Rissen in der Verstärkungsschicht möglichst zurückgedrängt werden.

Noch eine weitere Aufgabe ist in der Bereitstellung möglichst schlagfester Beschichtungen für Acrylglasformteile zu sehen.

Insbesondere ist die Angabe möglichst dünn beschichteter und möglichst hoch schlagfest beschichteter Acrylglasformteile eine der Erfindung zugrundeliegende Aufgabe.

Außerdem soll der neue Sanitärartikel möglichst einfach zu fertigen sein.

Weiters soll das Nachbearbeiten per Hand auf ein Mindestmaß reduziert werden.

Es soll ein möglichst ungefährliches Verfahren zur Herstellung hinterfütterter Acrylglasformteile angegeben werden.

Schließlich spielt auch eine möglichst hohe und einfache Automatisierbarkeit des Verfahrens zur Herstellung hinterfütterter Acrylglasformteile eine nicht unwesentliche Rolle

Gelöst werden diese Aufgaben sowie weitere Aufgaben, die zwar nicht im einzelnen wörtlich genannt wurden, die sich jedoch aus der einleitenden Diskussion des Standes der Technik ohne weiteres erschließen oder wie selbstverständlich ableiten lassen, durch einen hinterfütterten Sanitärartikel mit allen Merkmalen des Anspruches 1.

Vorteilhafte Ausgestaltungen des erfindungsgemäßen Sanitärartikels sind Gegenstand der auf den unabhängigen Produktanspruch rückbezogenen Ansprüche.

In verfahrensmäßiger Hinsicht geben die Merkmale des Anspruchs 19 eine Lösung des der Erfindung im Hinblick auf die Verfahrensaspekte zugrundeliegenden Problems an. Vorteilhafte Verfahrensvarianten werden in den vom unabhängigen Verfahrensanspruch abhängigen Verfahrensansprüchen unter Schutz gestellt.

Insbesondere dadurch, daß bei einem hinterfütterten Sanitärartikel, aufweisend ein Acrylglasformteil, das an seiner Rückseite mit glasfaser- und asbestfreiem, 1,5 bis 10 mm dickem Polymermaterial verstärkt ist, welches ohne zusätzliche Haftvermittler fest mit dem Acrylglasformteil verbunden ist, das verstärkende Material oder Verstärkungsmaterial durch Aushärtung eines auf die Rückseite des Acrylglasformteils aufgesprühten polymerisierbaren, kalthärtenden, reaktiven (Meth)acrylat-Systems erhältlich ist,
welches

| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 0 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| B) | auf 1 Gew.-Teil A) 0,05 - 5 Gew.-Teile eines in A) löslichen oder quellbaren (Pre)polymers | | |
| | | | |
| C) | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | unter den Bedingungen der Depolymerisation inerte Füllstoffe bezogen auf die Summe A) - E) mit einer Feinheit ≤ 100 µm | | 0 - 75 Gew.-% |
| | | | |
| F) | mit inertem Gas gefüllte hohle Mikropartikel, vorzugsweise aus Kunststoff, bezogen auf die Summe A) - F) | | 0,1 - 50 Gew.-% |

enthält,
gelingt es alle von den Norminstituten und den industriellen Verarbeitern bezüglich der physikalischen Eigenschaften des Sanitärartikels aufgestellten Forderungen in herausragender Weise zu erfüllen und eine große Zahl weiterer zusätzlicher Vorteile zu erlangen.

Hierzu gehören unter anderem:
⇒ Vollständige Recyclierbarkeit auf dem Weg der an sich bekannten Depolymerisation unter anderem durch Vermeidung von Polyestern (Polyesterharzfreiheit) gekoppelt mit der Vermeidung gesundheitlich bedenklicher Stäube (Glasfaserhäckselfreiheit).
⇒ Entfallen des "Anrollschrittes" bei der Fertigung und dadurch weitergehende Automatisierung des Herstellungsverfahrens durch Spritzroboter.
⇒ Mechanische Eigenschaften gemäß DIN EN 198 (Verformbarkeit, Schlagzähigkeit, Steifigkeit) werden in hervorragender Weise eingehalten und über die verlangten Maße hinaus erfüllt.
⇒ Hohe Festigkeit der Formteile bei Beanspruchung und überragende Dauerhaftigkeit der Verbindung zwischen Hinterfütterungsschicht und Acrylglasformteil.
⇒ Im Gegensatz zur JP-A 05-237854 handelt es sich beim Verfahren der Erfindung nicht um ein Injektionsverfahren, bei dem die gefüllte Harzmischung in einen Spalt zwischen tiefgezogenem Acrylglasformteil und ein Formwerkzeug eingefüllt wird, sondern um ein Spritzverfahren, bei dem kein Formwerkzeug benötigt wird. Ein entscheidender Vorteil des Spritzverfahrens ist hierbei die Tatsache, daß bei unterschiedlichen Wannendesigns keine entsprechend ausgeformten, kostspieligen Formwerkzeuge benötigt werden.
⇒ In der JP-A 05-237854 wird die Aushärtezeit der Mischung im Spalt zwischen Acrylglasformteil und Formwerkzeug mit 4 Stunden angegeben. Im Gegensatz dazu härtet das erfindungsgemäße Spritzsystem bei einer Härterdosierung von 5 % nach 15 - 25 Minuten aus. Dies bedeutet eine wesentliche Verkürzung der Produktionsdauer.
⇒ Durch die vorzugsweise Lösungsmittelfreiheit des (Meth)acrylatsystems wird die Gefahr des Auftretens von Spannungsrissen minimiert. Lösungsmittelhaltige Systeme neigen insbesondere beim Temperaturwechseltest nach DIN EN 198 zu Spannungsrissen in der fertigen Verstärkungsschicht.
⇒ Gegenüber der EP-A-0 693 503 besteht nicht nur der für die vollständige Recyclierbarkeit wesentliche Vorteil der Glasfaserhäcksel- oder auch generell Glasfaserverstärkungsfreiheit, es hat sich insbesondere herausgestellt, daß bei Sanitärartikeln gemäß der EP-A-0 693 503 immer noch mechanische Defizite auftreten, welche die Tauglichkeit der Artikel aus der EP-A-0 693 503 in Frage stellen. So gelingt es durch den Einsatz von bestimmten Füllstoffen F) in der Verstärkungsschicht, gerade die mechanischen und physikalischen Eigenschaften eines erfindungsgemäßen Sanitärartikels stark zu verbessern.

Ein hinterfütterter Sanitärartikel der Erfindung weist ein Acrylglasformteil und wenigstens eine verstärkende Hinterfütterungsschicht auf.

### Das Acrylglasformteil

Form und Art des Acrylglasformteils, das erfindungsgemäß hinterfüttert ist, unterliegen zunächst keiner besonderen Einschränkung. Es können Formteile aus Acrylglas hinterfüttert sein, die nach allen dem Fachmann zur Formgebung von Acrylglas bekannten Verfahren hergestellt worden sind. Hierzu gehören u. a. die Verarbeitung über den viskosen Zustand, wie Gieß-, Press- und Auftragverfahren, vorzugsweise Rotationsgießen, Schichtpressen, Formpressen, Spritzpressen, Lackieren, Tauchen, Beschichten, Rakeln, Laminieren u. dgl.; die Verarbeitung über den elastoviskosen Zustand, wie Kneten, Walzen, Kalandrieren, Extrudieren, Spritzgießen, vorzugsweise Sandwich-Spritzgießen, RIM-Verfahren; Verarbeitung über den elastoplastischen Zustand, wie Ziehen, Streckformen, Blasen, Schäumen, vorzugsweise Kaltverformungen wie Streckformen, Strecken, Ziehformen, Tiefziehen, Vakuumformen, Pultrusion, Extrusionsblasen, Spritzblasen, Spritzgießblasen, Spritzblasformen; Verarbeitung über den viskoelastischen Zustand, wie Schweißen, Sintern, Wirbelsintern, Flammspritzen, Heißstrahlspritzen u. dgl.; Verarbeitung über den festen Zustand, wie Schneiden, Stanzen, Schmieden, Sägen, Bohren, Drehen oder Fräsen. Bevorzugt ist Tiefziehen in allen Variationen, Vakuumformung, Vakuumformung ohne Formbegrenzung, Vakuumnegativverfahren, Dropform-Verfahren, Vakuumstreckformverfahren, Tiefziehsaugverfahren u. ä. Besonders bevorzugt für die Erfindung sind durch Tiefziehen erhältliche Acrylglasformteile.

Bezüglich der Art des Acrylglases besteht ebenfalls keine Limitierung. Alle marktüblichen Acrylgläser sind verwendbar.

Die Acrylglasformteile, die erfindungsgemäß mit einer Hinterfütterungsschicht versehen sind, enthalten bezüglich des Acrylglasformteils neben üblichen Additiven überwiegend Struktureinheiten, die hinsichtlich ihres chemischen Aufbaus der nachfolgenden Formel I gehorchen: 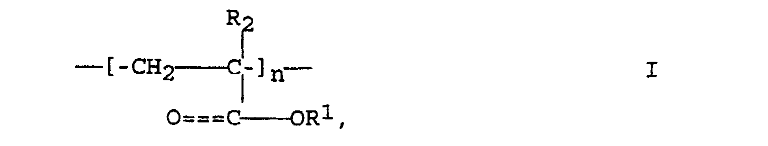 worin
R¹ C₁₋₆-Alkyl, bevorzugt C₁₋₄-Alkyl,
R² H, C₁₋₆-Alkyl, bevorzugt H oder C₁₋₄-Alkyl, ganz besonders bevorzugt H oder CH₃, und
n eine positive ganze Zahl größer 1
sind.

C₁₋₄-Alkyl umfaßt lineare und verzweigte Alkylreste mit eins bis vier Kohlenstoffatomen. Insbesondere von Interesse sind Methyl, Ethyl, n-Propyl, iso-Propyl, n-Butyl, 2-Methyl-1-propyl, sek.-Butyl, 2-Methyl-2-propyl.

C₁₋₆-Alkyl umfaßt die bei C₁₋₄-Alkyl genannten Reste und zusätzlich Reste mit 5 oder 6 Kohlenstoffatomen, wie vorzugsweise 1-Pentyl, 2-Pentyl, 3-Pentyl, 2,2-Dimethyl-1-propyl, 3-Methyl-1-butyl, 3-Methyl-2-butyl, 2-Methyl-2-butyl, 2-Methyl-1-butyl, 1-Hexyl.

Zu beispielhaften Verbindungen, welche die vorgenannte Struktureinheit aufweisen, gehören neben anderen Polymethylacrylat, Polyethylacrylat, Polymethylmethacrylat, Polypropylacrylat, Polybutylacrylat, Polypropylmethacrylat, Polybutylmethacrylat und Copolymere, die zwei oder mehrere dieser Polymersorten aufweisen. Die ersten vier Verbindungen sind im Rahmen der Erfindung bevorzugt. Ganz besonders bevorzugt ist Polymethylmethacrylat (PMMA).

Neben den chemischen Mischungen (statistische Copolymere oder auch Blockcopolymere), die durch Copolymerisation von wenigstens zwei substituierten oder unsubstituierten Acrylsäureestermonomeren entstanden sind (z. B. Methylmethacrylat-n-Butylmethacrylat-Copolymere), lassen sich im Rahmen der Erfindung auch Acrylglasformteile aus Copolymeren verwenden, die bis zu 50 Gew.-% wenigstens eines weiteren vinylisch ungesättigten Monomeren aufweisen, welches mit wenigstens einem substituierten oder unsubstituierten Acrylsäureestermonomeren copolymerisierbar ist.

Beispiele hierfür sind u. a. Methylmethacrylat-Styrol-Copolymere oder Methylmethacrylat-Butylacrylat -Styrol-Terpolymere.

Es handelt sich bei den Comonomeren um optionale Bestandteile oder Komponenten, die vorzugsweise in untergeordneter Menge in Form von sie aufweisenden Copolymeren im Acrylglas enthalten sind. Sie werden in der Regel so ausgewählt, daß sie keinen nachteiligen Effekt auf die Eigenschaften des erfindungsgemäß zu verwendenden Acrylglases haben.

Das erwähnte oder die erwähnten Comonomeren kann bzw. können u. a. dazu eingesetzt werden, die Eigenschaften des Copolymeren auf erwünschte Weise zu modifizieren, beispielsweise durch Steigerungen oder Verbesserungen der Fließeigenschaften, wenn das Copolymer im Rahmen seiner Verarbeitung zu Glas auf die Schmelztemperatur erhitzt wird, oder zur Reduzierung einer Restfarbe im Copolymer oder durch Verwendung eines polyfunktionellen Monomeren, um auf diese Art und Weise ein gewisses Maß an Vernetzung in das Copolymer einzuführen.

Zu für diesen Zweck geeigneten Monomeren gehören u. a. Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol. Die Farbverminderung des Copolymeren kann beispielsweise besonders bevorzugt durch Einsatz eines elektronenreichen Monomeren, wie beispielsweise eines Vinylethers, Vinylacetat, Styrol oder α-Methylstryrol, erreicht werden.

Besonders bevorzugt unter den genannten Comonomer-Verbindungen sind aromatische Vinylmonomere, wie beispielsweise Styrol oder α-Methylstyrol.

Auch physikalische Mischungen, sogenannte Blends, sind für die Acrylglasformteile bevorzugt.

Dabei ist u. a. auch zu berücksichtigen, daß der Begriff "Acrylglas" zwar grundsätzlich eine Sammelbezeichnung für organische Kunstgläser aus Polymethacrylaten darstellt, wobei diese durch Substanz- oder Perlpolymerisation (Suspensionspolymerisation) und nachträgliches Extrudieren bzw. Spritzgießen in Form von Tafeln, Rohren, Stäben, Blöcken hergestellt werden.

Im Rahmen der Erfindung jedoch sollen per Definitionem auch die hierin oben geschilderten Abwandlungen unter dem Begriff "Acrylglas" verstanden werden.

Besonders bevorzugt sind jedoch auch für die Erfindung Kunstgläser aus Polymethacrylsäuremethylestern.

### Die Hinterfütterungsschicht (en)

Bei den erfindungsgemäßen Sanitärartikeln, z. B. Wannen und Becken, gelingt es dadurch, daß das Verstärküngsmaterial eine relativ geringe Dicke im Bereich von 1,5 bis 10 mm, bevorzugt 1,5 - <8 mm, aufweisen kann, eine hohe Gewichts- und Materialersparnis zu realisieren, womit bei Einhaltung der erforderlichen Festigkeitswerte eine Reduzierung der Stückkosten einhergeht. Verstärkt wird dieser Ersparniseffekt zusätzlich durch die Beschaffenheit der Verstärkungsschicht, insbesondere auch im Hinblick auf die Füllstoffe F), und die Art der Aufbringung der die Verstärkungsschicht ergebenden Materialien. Ein zusätzlicher Ersparniseffekt ergibt sich durch die schnelle Aushärtungszeit.

Durch den Einsatz in der oder den Hinterfütterungsschichten von hohlen Mikropartikeln aus Kunststoff, die mit inertem Gas gefüllt sind, gelingt in nicht ohne weiteres vorhersehbarer Weise, eine überraschende Verbesserung von wichtigen Eigenschaften der verstärkten Sanitärartikel gemäß der Erfindung.

So haben die erfindungsgemäß einsetzbaren Hohlkugeln eine relativ niedrige Dichte, verglichen mit anderen Feinstfüllstoffen, wodurch sich die Dichte des spritzfähigen Materials verringert. Dies bewirkt bei ähnlicher Schichtstärke eine Einsparung an Material von ca. 1/3.

Darüber hinaus verbessern sich die mechanischen Eigenschaften des ausgehärteten Materials erheblich. Hierbei überrascht nicht nur die Tatsache, daß überhaupt Eigenschaften wie die Schlagfestigkeit oder Haftzugfestigkeit des Verbundes aus Acrylglasformteil und Hinterfütterung verbessert werden, viel überraschender ist noch die Qualität der Verbesserung. So sind Verbesserungen der Haftzugfestigkeit von 100 % und mehr zu registrieren, verglichen mit Verstärkungsschichten ohne Mikrohohlkugeln.

Schließlich zeigt sich das Absetzverhalten der Füllstoffe in den kalthärtenden (Meth)acrylatharzen dramatisch verbessert. Hat man bei herkömmlichen Harzen schon nach wenigen Wochen oder sogar Tagen Lagerzeit mit Entmischungsproblemen zu kämpfen, sind die (Meth)acrylatharze mit Füllstoffen der Kategorie F) auch nach mehreren Monaten noch absolut homogen und zeigen keinerlei Bodensatz, was deren Verarbeitbarkeit durch die Anwender deutlich erleichtert.

In einer ganz besonderen Ausführungsform kennzeichnet sich ein erfindungsgemäßer Sanitärartikel dadurch; daß das Verstärkungsmaterial aus einer ersten und einer zweiten Schicht besteht, wobei die erste Schicht durch Aushärtung eines auf die Rückseite des Acrylglasformteils aufgesprühten polymerisierbaren, kalthärtenden, reaktiven, ersten (Meth)acrylat-Systems erhältlich ist,
welches

| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 10 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Gew.-Teil A) 0,05 - 5 Gew.-Teile eines in A) löslichen oder quellbaren (Pre)polymers | | |
| | | | |
| C) | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | unter den Bedingungen der Depolymerisation inerte Feinstfüllstoffe bezogen auf die Summe A) - E) mit einer Feinheit ≤ 100 µm | | 0 - 75 Gew.-% |
| | | | |
| F) | mit inertem Gas gefühlte hohle Mikropartikel, vorzugsweise aus Kunststoff, bezogen auf die Summe A) - F) | | 0,1 - 50 Gew.-% |

enthält,
und die zweite Schicht durch Aushärtung eines auf die erste Schicht aufgesprühten, polymersisierbaren, kalthärtenden, reaktiven, zweiten (Meth)acrylat-Systems erhältlich ist, welches vom ersten (Meth)acrylat-System verschieden ist, wobei auf das zweite (Meth)acrylat-System bis auf die Komponente a3), i.e. bis auf den Gehalt an ≥ C₅ (Meth)acrylat, der 0 bis < 10 Gew.-% beträgt, und bis auf die Komponente F), die bezogen auf die Summe A)-F) in einer Menge von 0-50 Gew.-% vorhanden ist, dieselbe allgemeine Definition zutrifft wie auf das erste (Meth)acrylat-System.

Obwohl mit einer einschichtigen Verstärkung aufgrund der besonderen Füllstoffe bereits alle Erfordernisse der DIN EN 198 erfüllt werden können, hat die zweischichtige Verstärkung im Rahmen der Erfindung den Vorteil, daß bestimmte mechanische Eigenschaften (vor allem die Schlagzähigkeit) des fertigen Sanitärartikels weiter verbessert werden können.

Die Hinterfütterungs- oder Verstärkungsschicht ebenso wie die in zweckmäßiger Abwandlung der Erfindung das Acrylglasformteil verstärkenden wenigstens zwei Hinterfütterungsschichten sind durch Aushärtung eines oder durch Aushärtung von zwei oder mehreren polymerisierbaren, kalthärtenden, reaktiven (Meth)acrylat-Systemen erhältlich, die sich jeweils aus den Komponenten A) bis D) zusammensetzen, die zusammen das Bindemittel darstellen, sowie den Füllstoffen E) und F).

Dies bedeutet in einer ersten Variante, daß ein (Meth)acrylatsystem die einzige rückseitige Verstärkungsschicht eines Sanitärartikels aus geformtem Arcylglas ausbildet.

Dies bedeutet auch, daß in einer zweiten Variante ein erstes (Meth)acrylatsystem eine erste rückseitige Schicht auf dem Acrylglasformteil ausbildet, während ein zweites (Meth)acrylatsystem eine zweite rückseitige Schicht auf dem Acrylglasformteil und der ersten rückseitigen Schicht ausbildet.

Obwohl im letztgenannten Fall beide, also sowohl das erste als auch das zweite (Meth)acrylatsystem aus den Komponenten A) bis F) bestehen können, sind die einzelnen Bestandteile im Hinblick auf Art und/oder Menge so aus den vorgegebenen Definitionen ausgewählt, daß erstes und zweites (Meth)acrylatsystem eindeutig voneinander verschieden sind.

### Das Bindemittel

Das Bindemittel eines (Meth)acrylatsystems setzt sich wiederum zusammen aus polymerisierbaren Monomeren A), ggf. in diesem löslichen oder quellbaren (Pre)polymeren B), einem Redoxsystem C) sowie gegebenenfalls weiteren üblichen Additiven D).

### Die Komponente A)

Die Komponente A) ist essentieller Bestandteil des Bindemittels und damit der Verstärkungsschicht.

### Erste Variante: nur eine Verstärkungsschicht

Als Monomer A) kann ein einziges Monomer eingesetzt werden, z. B. Methylmethacrylat, üblicherweise wird jedoch ein Gemisch verwendet. Die Zusammensetzung der Komponente A) ist:

| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≥ C₅ (Meth)acrylat | 0 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-%. |

Vorzugsweise ist Styrol auf max. 20 Gew.-% in A) beschränkt, da ein höherer Gehalt zu Störungen bei der Kalthärtung führt und mit starken Geruchsbelästigungen zu rechnen ist.

Ein in Klammern gesetzter Bestandteil steht für dessen optionale Verwendbarkeit, d. h. (Meth)acrylat steht für Acrylat und/oder Methacrylat.

Die Monomerkomponente A) enthält zumindest 30 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigen Esterrest sind auf 50 Gew.-% in der Komponente A) beschränkt.

Die langkettigen (Meth)acrylate machen in der angegebenen Menge das System schlagzäher. Damit machen diese Ester die Hinterfütterung der Acrylglasformteile zwar flexibler, aber auch weicher, wodurch die Gebrauchseigenschaften bei Mengen über 50 Gew.-% eingeschränkt würden. Vorzugsweise sind in der Komponente A) auch mehrwertige (Meth)acrylate enthalten. Vorzugsweise sind ≥ C₅ (Meth)acrylate im ersten Fall im (Meth)acrylatsystem in der Komponente A) in einer Menge von 10 - 30 Gew.-%, besonders zweckmäßig in einer Menge von 15 - 25 Gew.-%, enthalten.

Neben den (Meth)acrylaten kann die Komponente A) auch andere Comonomere enthalten, wobei deren Anteil auf 50 Gew.-% beschränkt ist. Unter diesen Comonomeren können Vinylaromaten und/oder Vinylester zu jeweils bis zu 30 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu 80 - 100 Gew.-% und besonders bevorzugt zu 90 - 100 Gew.-% aus (Meth)acrylaten aufgebaut, da sich mit diesen Monomeren günstige Verarbeitungs- und Gebrauchseigenschaften für die Hinterfütterung erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.-% und besonders vorteilhaft zu max. 20 Gew.-% in der Komponente A) enthalten. Hierdurch lassen sich besonders flexible Hinterfütterungsschichten aufbauen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat.

Als Comonomere eignen sich insbesondere Vinyltoluol, Styrol, Vinylester.

Besonders vorteilhaft sind polyfunktionelle (Meth)acrylate in der Komponente A) enthalten, wobei deren Gehalt üblicherweise im Bereich 1 bis 50 Gew.-% und meist bei 1 bis 10 Gew.-% in A) liegt. Die polyfunktionellen (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflußt werden.

Zu einsetzbaren mehrfachfunktionellen (Meth)acrylaten gehören unter anderem:
(i) Difunktionelle (Meth)acrylate
   Verbindungen der allgemeinen Formel: 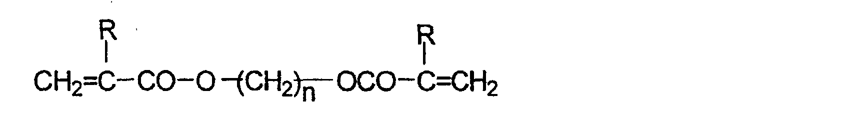 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols, Verbindungen der allgemeinen Formel: 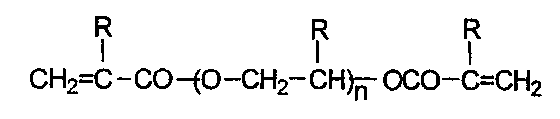 worin R Wasserstoff oder Methyl ist und n eine positive ganze Zahl zwischen 1 und 14, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylenglycols und Tetradecapropylenglycols; und Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy) butan.
(ii) Tri- oder mehrfachfunktionelle (Meth)acrylate Trimethylolpropantri(meth)acrylat und Pentaerythritoltetra(meth)acrylat.

Bevorzugte übliche polyfunktionelle (Meth)acrylate umfaßen neben anderen Triethylenglykoldimethacrylat (TEDMA), Trimethylolpropantrimethacrylat (TRIM), 1,4-Butandioldimethacrylat (1,4-BDMA), Ethylenglykoldimethacrylat (EDMA).

### Zweite Variante: wenigstens zwei Verstärkungsschichten

a)erstes (Meth)acrylat-System, d. h. Methacrylatsystem der ersten Verstärkungsschicht, i.e. diejenige Verstärkungsschicht, welche unmittelbar auf das Acrylglasformteil aufgesprüht und darauf gehärtet ist.
Die Zusammensetzung der Komponente A) ist für diesen Fall:

| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≥ C₅ (Meth)acrylat | 10 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-%. |

Längerkettige (Meth)acrylate, d. h. solche mit einem C₅-oder längerkettigen Esterrest, sind essentieller Bestandteil bei den (Meth)acrylaten des ersten (Meth)acrylatsystems, da sie wenigstens 10 Gew.-% der (Meth)acrylate und damit auch der Komponente A) des ersten (Meth)acrylatsystems ausmachen.
b)zweites (Meth)acrylat-System, d. h. (Meth)acrylat-System der zweiten Verstärkungsschicht, i. e. diejenige Schicht, welche auf eine bereits auf das Acrylglasformteil aufgesprühte rückseitige erste Verstärkungsschicht aufgesprüht ist und auf der ersten Verstärkungsschicht ausgehärtet ist.

Auf das zweite (Meth)acrylat-System trifft im Hinblick auf die Beschaffenheit der Monomeren (Komponente A)) dieselbe allgemeine Definition zu wie sie für die Komponente A) des ersten (Meth)acrylat-Systems gilt, wobei es bei den ≥ C₅-Methacrylaten einen wesentlichen Unterschied gibt.

Die Zusammensetzung der Komponente A) ist:

| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≥ C₅ (Meth)acrylat | 0 - <10 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-%. |

Längerkettige Ester, d. h. solche mit einem C₅- oder längerkettigen Esterrest sind auf < 10 Gew.-% in der Komponente A) beschränkt. Diese Ester machen die Hinterfütterung der Acrylglasformteile zwar flexibler, aber auch weicher, wodurch ihre Gebrauchseigenschaften eingeschränkt werden. Dadurch ist die Einstellung der zweiten Schicht (geringer Anteil ≥ C₅-Ester) härter und damit steifer, verglichen mit der ersten Schicht.

### Die Komponente B)

Die nachfolgende Beschreibung gilt sowohl für eine einschichtige Verstärkung als auch für das erste als auch das zweite (Meth)acrylatsystem einer mehrschichtigen Verstärkung, wobei bei Vorhandensein mehrerer Verstärkungsschichten die jeweilige Komponente B) in jedem der Systeme unabhängig voneinander der nachfolgenden Definition gehorcht.

### Die Komponente B) ist essentiell.

Zur Einstellung der Viskosität des Bindemittels und der gesamten Rheologie des Systems sowie der besseren Durchhärtung wird der Komponente A) ein Polymer oder Prepolymer B) zugegeben. Dieses (Pre)polymer soll in A) löslich oder quellbar sein. Auf einen Teil A) werden 0,05 bis zu 5 Teile des Prepolymers B) eingesetzt. Geeignet sind insbesondere Poly(meth)acrylate, wobei diese als festes Polymerisat in A) gelöst werden können oder wobei ein sogenannter Sirup eingesetzt werden kann, d. h. teilweise polymerisierte Massen entsprechender Monomere. Weiterhin sind geeignet Polyvinylchlorid, Polyvinylacetat, Polystyrol, Epoxydharze, Epoxy(meth)acrylate, ungesättigte Polyester, Polyurethane oder Mischungen hiervon. Diese Polymere bewirken im Bindemittel z. B. spezielle Flexibilitätseigenschaften, Schrumpfregulierung, wirken als Stabilisator, Hautbildner oder Verlaufsverbesserer.

Die Hinterfütterungsschichten enthalten bevorzugt 10 - 30 Gew.-%, besonders vorteilhaft 15 -20 Gew.-% eines hochmolekularen Polymers B), z. B. Poly(meth)acrylats, bezogen auf die Summe A) + B).

In bevorzugter Ausführungsform ist das Gewichtsverhältnis der Komponenten B) und A) des Bindemittels im Bereich von 0,1 : 1 bis 2 : 1. Hierdurch wird eine optimale Abstimmung erreicht.

Besonders zweckmäßig sind Gewichtsverhältnisse B) : A) im Bereich von 0,2 : 1 bis 1 : 1.

Die Komponente B) ((Pre)polymer) kann ein Suspensionspolymerisat, Emulsionspolymerisat und/oder Mahlgranulat aus Recyclingprozessen sein. Der mittlere Teilchendurchmesser der Prepolymere liegt dann üblicherweise bei < 0,8 mm.

Beim Prepolymer B) handelt es sich ganz vorteilhaft um eine durch Suspensionspolymerisation erhältliche PMMA-Lackperle. Diese erlaubt insbesondere auch einschichtige Verstärkungen mit ausreichender Schlagzähigkeit.

Der mittlere Teilchendurchmesser der Lackperle beträgt dabei etwa 0,1 -0,8 mm. Bevorzugt sind 0,2 - 0,8 mm, insbesondere 0,4 - 0,8 mm.

Die nachfolgende Beschreibung der Komponente B) des Bindesmittels und damit einer Verstärkungsschicht gilt insbesondere für die Ausführungsform mit wenigstens zwei verstärkenden Schichten.

Bei (Pre)polymer B) handelt es sich bevorzugt um ein Copolymer, wobei sich Härte und Flexibilität der Verstärkungsschichten durch Art und Menge des Comonomeren im (Pre)polymer B) beeinflußen lassen. Zu einsetzbaren Comonomeren, welche am Aufbau des jeweiligen (Pre)polymeren B) beteiligt sind, gehören u. a. Acrylate und Methacrylate, die von Methylmethacrylat (MMA) verschieden sind, Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol.

Bevorzugte Comonomere sind für Methylacrylat u. a., Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat, Hydroxypropylmethacrylat.

Der Comonomergehalt der Prepolymere B) liegt für die erste Verstärkungsschicht günstigerweise bei 30 - 80 %, für die zweite Verstärkungsschicht günstigerweise bei 0 - < 30 %, jeweils bezogen auf das gesamte Gewicht der am Aufbau eines Prepolymeren B beteiligten Monomeren oder Monomereinheiten.

### Die Komponente C)

Die Komponente C) ist eine essentielle Komponente des Bindemittels und damit einer jeden Verstärkungsschicht.

Die nachfolgende Beschreibung gilt sowohl für eine einschichtige Verstärkung als auch für das erste als auch das zweite (Meth)acrylatsystem einer mehrschichtigen Verstärkung, wobei die Komponente C) in jedem der Systeme unabhängig voneinander der Definition gehorcht.

Das erfindungsgemäß im (Meth)acrylat-System zu verwendende Bindemittel ( A) bis D) ) ist jeweils geeignet zur Kalthärtung, d. h. enthält zur Polymerisation ein Redoxsystem aus einem Beschleuniger und einem peroxydischen Katalysator oder Initiator, wobei diese Komponenten in genügender Menge zur Kalthärtung der Komponente A) zugegeben werden.

Es versteht sich, daß entweder das Redoxsystem oder zumindest Teile davon bis zum gewünschten Zeitpunkt der Polymerisation von den polymerisierbaren Substanzen des Bindemittels getrennt zu halten sind.

Der Beschleuniger wird üblicherweise in einer Menge von 0,01 bis 5 Gew.-% in A) bis D) eingesetzt, besonders vorteilhaft zu 0,5 bis 1,5 Gew.-%.

Als Beschleuniger eignen sich insbesondere Amine und Mercaptane, bevorzugt sind Dimethyl-p-toluidin, Diisopropoxy-p-toluidin, Diethylol-p-toluidin, Dimethylanilin und Glykoldimercaptoacetat. Des weiteren dienen als Beschleuniger organische Metallsalze, die üblicherweise im Bereich 0,001 bis 2 Gew.-% in A) bis D) eingesetzt werden. Geeignet sind z. B. Kobaltnaphthenat, Kupfernaphthenat, Kobaltoleat, Kupferoleat.

Als peroxydischer Katalysator eignen sich insbesondere Dibenzoylperoxid und Dilauroylperoxid. Die Peroxide werden üblicherweise zu 0,1 bis 10 Gew.-% und insbesondere zu 0,5 bis 5 Gew.-% im Bindemittel eingesetzt. Zweckmäßig wird als peroxydischer Katalysator für das Spritzharzsystem eine wäßrige 40%ige Suspension von phlegmatisiertem Dibenzoylperoxid (z. B. Cadox 40 E der Fa. Akzo) eingesetzt.

Im Bindemittel können von der Komponente C) schon die Beschleuniger, z. B. Dimethylparatoluidin, enthalten sein, ohne daß eine Polymerisation bei Umgebungstemperatur stattfindet. Durch Zugabe der restlichen Bestandteile der Komponente C) wird die Reaktion gestartet, wobei die Komponente C) üblicherweise so bemessen ist, daß das (Meth)acrylat-System eine Topfzeit im Bereich von 10 min bis 30 min hat.

Das erfindungsgemäße (Meth)acrylat-System enthält also nur unmittelbar vor der Anwendung die vollständige Komponente C), bis zum Gebrauch ist die Komponente C) nicht oder nur zum Teil enthalten.

Ganz besonders bevorzugt werden lösungsmittelfreie Härterkomponenten eingesetzt.

### Die Komponente D)

Die nachfolgende Beschreibung gilt sowohl für eine einschichtige Verstärkung als auch für das erste als auch das zweite (Meth)acrylatsystem einer mehrschichtigen Verstärkung, wobei die Komponente D) in jedem der Systeme unabhängig voneinander der Definition gehorcht.

Bei der Komponente D) handelt es sich um eine optionale Komponente.

Das Bindemittel ( A) bis D) ) kann ferner noch übliche Additive D) enthalten, wie sie in reaktiven (Meth)acrylat-Systemen meist eingesetzt werden. Diese Additive dienen z. B. der Aufhebung der Sauerstoffinhibierung, hierfür sind insbesondere Paraffine zu 0,05 bis 5 Gew.-% im Bindemittel ( A) bis D) ) und/oder Phosphite zu 0,01 bis 1 Gew.-% in A) bis D) sowie auch eine Polymerhautbildung (paraffinfrei) geeignet. Für letzteres können, um eine nicht inhibierte Oberfläche ohne Paraffin zu erzielen, z. B. extrem hochmolekulare Polymere als Additiv, insbesondere bei Alleinverwendung von Methylmethacrylat, verwendet werden. Schon während der Härtung verdunstet Methylmethacrylat an der Oberfläche und hinterläßt eine klebfreie Oberfläche durch Polymerhautbildung.

Des weiteren können zugesetzt werden Entschäumer, Netzmittel, Thixotropierungsmittel, Inhibitoren, Mattierungsmittel, Bläuungsmittel, UV-Stabilisatoren, Polymerisationskettenregler.

Hiervon sind besonders Thixotropierungsmittel bevorzugt. Diese dienen zur Verbesserung der Lagerstabilität und des Absetzungsverhaltens von Partikeln in den Harzkomponenten.

In bevorzugter Ausführungsform ist der hinterfütterte Sanitärartikel der Erfindung daher dadurch gekennzeichnet, daß wenigstens eines der für die Hinterfütterung verwendeten Harzsysteme bezogen auf die Füllstoffe E) bis zu 0,5 Teile Thixotropiermittel auf 1 Teil der Partikel E) enthält.

Übliche Thixotropiermittel sind z. B. Kieselsäure, z. B. Aerosil®200, Aerosil®300.

### Die Füllstoffe

Die Füllstoffe eines (Meth)acrylatsystems der Erfindung setzen sich aus den Sorten E) und F) zusammen. Die Sorte E) ist optional, während die Füllstoffe F) essentiell zumindest für eine der Verstärkungen gemäß der Erfindung sind.

### Die Komponente E)

Die nachfolgende Beschreibung gilt sowohl für eine einschichtige Verstärkung als auch für das erste als auch das zweite (Meth)acrylatsystem einer mehrschichtigen Verstärkung, wobei die Komponente E) in jedem der Systeme unabhängig voneinander der Definition gehorcht.

Als optionale Bestandteile enthalten das einzige ebenso wie das erste als auch das zweite (Meth)acrylat-System die Komponente E), nämlich einen oder mehrere unter den Bedingungen der Depolymerisation der (Meth)acrylate inerte(n) Füllstoff(e) mit einer Feinheit ≤ 100 µm und bezogen auf die Summe A) bis E) in einer Menge zu 0 - 75 Gew.-%. Dabei versteht es sich, daß das erste (Meth)acrylat-System andere Füllstoffe aufweisen kann als das zweite, daß also Art und Menge der Füllstoffe im angegebenen Rahmen voneinander unabhängig sind.

Hierbei werden in Bezug auf die Erfindung unter Füllstoffen, die unter den Bedingungen der Depolymerisation der (Meth)acrylate inert sind, solche Substanzen verstanden, die die Depolymerisation von Acrylatpolymeren nicht wesentlich nachteilig beeinflussen oder gar unmöglich machen.

Acrylatpolymere, vor allem PMMA, zählen zu den wenigen Kunststoffen, die hervorragend für das direkte chemische Recycling geeignet sind. Hierunter ist zu verstehen, daß diese Polymere sich bei bestimmten Temperaturen und Drucken wieder vollständig in die entsprechenden Monomerbausteine zerlegen lassen (Depolymerisation), wenn auf geeignete Weise Wärme zugeführt wird. So werden beispielsweise zur Depolymerisation von Polymethylmethacrylat (PMMA) und Rückgewinnung des dabei anfallenden monomeren Methylmethacrylats (MMA) durch thermische Behandlung von Acrylglas-Abfällen bei Temperaturen > 200 °C, Kondensation der entstehenden Monomer-Brüden und Aufarbeitung der rohen Monomeren in der Literatur und in den Patentschriften verschiedene kontinuierliche und diskontinuierliche Verfahrensweisen beschrieben. Bei dem industriell am häufigsten angewandten Verfahren wird das Polymermaterial in einen teilweise mit Blei gefüllten Kessel gegeben, der von außen beheizt wird. Bei Temperaturen von über 400 °C depolymerisiert das Polymermaterial und die entstehenden Monomerdämpfe gelangen über eine Rohrleitung in einen Kondensator, wo sie zu einem rohen, flüssigen Monomer kondensiert werden. Entsprechende Depolymerisationsverfahren sind beispielsweise aus der DE-OS 21 32 716 bekannt.

Die Füllstoffe E), wie sie nun im Rahmen der Erfindung eingesetzt werden, dürfen keine Stoffe sein oder im Laufe der Depolymerisation Zersetzungsprodukte ergeben, die eine Aufarbeitung des rohen, flüssigen Monomers, das in der Depolymerisation recycliert werden soll, unmöglich machen oder unnötig erschweren. Bevorzugt werden daher solche Füllstoffe, die sich auf der Oberfläche des Metalls als Schlacke sammeln und beispielsweise während des Betriebs des Reaktors mit einem Rechen, Schieber oder dergleichen entfernt werden können. Unter Verwendung erfindungsgemäßer Füllstoffe E) liegt somit ein hinterfütterter Sanitärartikel vor, der vollständig recyclierbar ist.

Als Füllstoffe werden meist mineralische Füllstoffe verwendet. Zu den in einem einzigen oder im ersten und/oder zweiten (Meth)acrylat-System vorteilhaft einsetzbaren Füllstoffen gehören im Rahmen der Erfindung Glimmer, Aluminiumhydroxid, calcitische Füllstoffe wie etwa Kreide und Marmor, quarzitische Füllstoffe wie Wollastonit, Cristobalit und ähnliche, amorphe Silicate, Flugasche, Siliciumcarbid und/oder Schwerspat.

Für die Erfindung sind hiervon Glimmer, Aluminiumtrihydrat (Aluminiumhydroxid), quarzitische und calcitische Füllstoffe besonders geeignet. Äußerst vorteilig ist der Einsatz von Glimmer sowohl im ersten als auch zweiten (Meth)acrylat-System oder auch im (Meth)acrylat-System einer einschichtigen Verstärkung.

Die Füllstoffe E) werden entweder allein oder in Kombination von mehreren verwendet. Die Menge liegt wie bereits ausgeführt zwischen 0 und 75 Gew.-% bezogen auf die Summe der Komponenten A) bis E) des Bindemittels + Füllstoffe.

Liegt der Anteil an Füllstoffen E) höher als 75 Gew.-%, so kann dies die Misch- und Verarbeitungseigenschaften des Hinterfütterungsmaterials negativ beeinflussen, insbesondere kann eine Mischung mit so hohem Füllstoffanteil nur noch schlecht versprüht oder gepumpt werden. Außerdem kann bei höheren Füllstoffgehalten nicht mehr sichergestellt werden, daß genügend Bindemittel zur Verfügung steht, um eine stabile Beschichtung zu erhalten.

Andererseits ist erfindungsgemäß ein relativ hoher Anteil an Füllstoffen E) bevorzugt. Insbesondere wird aus Kostengründen eine möglichst hohe Menge angestrebt. Bevorzugt sind Füllstoffe E) in einer Menge von 40 - 65 Gew.-%, besonders bevorzugt in einer Menge von 50 - 60 Gew.-%, jeweils bezogen auf die Summe der Komponenten A) - E), enthalten.

Für die Erfindung werden glatte Füllstoffe bevorzugt. Hierunter sind möglichst glatte Oberflächen aufweisende Partikel zu verstehen. Die Partikelgröße der erfindungsgemäßen Füllstoffe beträgt ≤ 100 µm. Es handelt sich mithin um Feinstfüllstoffe. Die Partikelgröße der Füllstoffe E) wird durch Siebanalyse bestimmt und ist in der angegebenen Größe erforderlich, um die Verarbeitung des Füllstoffs E) + Bindemittel A) - D)-Systems zu gewährleisten. Insbesondere bei Verarbeitung durch Versprühen wird die Größe der Füllstoffpartikel durch das verwendete Düsensystem limitiert. Die Größe der Füllstoffpartikel E) ist jedoch vom Fachmann an die Erfordernisse des Verarbeitungssystems anzupassen.

Hinzu kommt, daß kleine Füllstoffpartikel mit glatter Oberfläche besser von Bindemittel umhüllt sind, weniger zu Aggregation neigen und keine Luftpolster in der Verstärkungsschicht ausbilden.

Daher kennzeichnet sich ein hinterfütterter Sanitärartikel der Erfindung in besonderer Abwandlung dadurch, daß die Füllstoffe E) des ersten (Meth)acrylat-Systems, welches zur ersten rückseitigen Schicht aushärtet, eine Feinheit ≤ 30 mm aufweisen. Solcherart Feinstfüllstoffe erlauben eine besonders saubere und einfache Aushärtung der ersten Schicht sowie ein problemloses Auftragen der zweiten Schicht.

### Die Komponente F)

### Erste Variante: Einschichtige Verstärkung

Die nachfolgende Beschreibung betrifft zunächst den Fall einer einschichtigen Verstärkung.

Die Füllstoffkomponente F) ist für eine einschichtige Verstärkung erfindungswesentlich. Es handelt sich bei den Mikropartikeln F) um eine essentielle Komponente einer einschichtigen Verstärkung.

Für die erfindungsgemäße Verstärkungsschicht ist eine ganze Reihe von Mikropartikeln einsetzbar. Grundsätzlich handelt es sich um hohle Partikel, die regelmäßig oder unregelmäßig sein können, die jedoch bevorzugt kugelförmig oder sphärisch sind und in ihrem Hohlraum inertes Gas aufweisen.

Zu den als Komponente F) verwendbaren Mikrohohlkugeln zählen grundsätzlich Mikrohohlkugeln aus Polymeren.

Bevorzugt werden für die Erfindung Mikrohohlkugeln aus Kunststoff eingesetzt.

Besonders bevorzugt werden bei der vorliegenden Erfindung als Komponente F) für die Verstärkungsschicht Mikrohohlkugeln eingestetzt, die aus Polymeren bestehen, wie z.B. Polystyrol, Polyvinylchlorid, Polyvinylidenchlorid, Polyvinylacetat, Polyacrylat, Polyacrylnitril, Polybutadien, Polyethylenterephthalat; desweiteren bevorzugt sind auch Mikrohohlkugeln aus Copolymeren oder Terpolymeren, welche auf solchen Monomeren basieren, die die genannten Copolymeren ausbilden.

Beispiele für solche Polymere und Copoymere, welche die Hohlkugeln selbst sind unter anderem Vinylidenchlorid-Acrylnitrilcopolymer, Polyvinylidenchlorid, Acrylnitrilvinylidenchloridcopolymer, Acrylnitrilmethacrylonitrilcopolymer, Acrylnitrildivinylbenzol-vinylidenchloridcopolymer u. dgl.

Im Rahmen der Erfindung lassen sich als Komponente F) bevorzugt auch Mischungen von Mikrohohlkugeln einsetzen.

Die gemäß der Erfindung einsetzbaren Mikrohohlkugein oder Mikropartikel können zur Anpassung der Verarbeitungseigenschaften oder zur Variation der Verstärkungseigenschaften mit Überzügen beschichtet sein.

Besonders geeignet sind auch Abwandlungen von den einfachen Mikrohohlkugeln. Beispielsweise sind solche Mikrohohlkugeln von besonderem Interesse, die aus Polymeren bestehen, welche mit mineralischen Stoffen überzogen (beschichtet) sind, um eine bessere Stabilität gegen den Einfluß des umgebenden Mediums (Methacrylat-Harz) zu gewährleisten.

Die Beschichtung der Mikrohohlkugeln kann aus feinstkörnigen Mineralstoffen wie z.B. Calciumcarbonat, Quarz, Glimmer, Aluminiumhydroxid, Cristobalit und dergleichen bestehen.

Besonders bevorzugt sind Mikrohohlkugeln, insbesondere solche aus Kunststoff, die mit Calciumcarbonat beschichtet sind.

Die im Rahmen der Erfindung als Komponente F) besonders günstig wirkenden Mikrohohlkugeln können neben anderen Methoden grundsätzlich auf die folgenden Arten und Weisen hergestellt werden:
→ Beschichtung eines Kerns (Opferkern) mit dem betreffenden Material, anschließend wird der Kern durch unterschiedliche Methoden entfernt (z.B. Auflösen in einem Lösemittel, Verdampfen oder Verflüchtigen), so daß nur die Schale übrig bleibt.
→ Herstellung in einem Düsenreaktor (Nozzle-Reactor System):
   Hierbei werden über speziell konstruierte Düsensysteme (konzentrische Öffnungen) das in den Mikrohohlkugeln befindliche Gas sowie das verflüssigte Material für die Hülle der Kugeln versprüht.
   In einer Art Sprühturm kühlt das verflüssigte Material ab und erstarrt zu einer mit dem jeweiligen Gas (z.B. H₂O, CO₂, SO₂, Luft, N₂, etc.) gefüllten Mikrohohlkugel. Mit dieser Methode stellt man vor allem Mikrohohlkugeln aus polymeren Materialien her.
→ Phasentrennung von Emulsionen durch Flüssigextraktion:
   Hierbei werden die in einer Emulsion vorliegenden kugelförmigen, mit Flüssigkeit gefüllten Partikel (Micellen) von der umgebenden Flüssigkeit abgetrennt und anschließend getrocknet.

Eine Übersicht zur Herstellung der Mikrohohlkugeln findet sich beispielsweise in Mat. Res. Soc. Symp. Proc. Vol. 372, 1995 Materials Research Society bei David L. Wilcox, Sr. und Morris Berg, Seiten 3 bis 13, und der darin zitierten Literatur.

Zu besonders geeigneten Typen von gasgefüllten Mikrohohlkugeln aus Kunststoff gehören unter anderem ®Dualite-Typen, z.B. ®Dualite M 6017AE, (Pierce & Stevens Corp.); ®Expancel-Typen, z.B. ®Expancel 642 WU, ®Ropaque-Typen, z.B. ®Ropaque OP 62 (Rohm and Haas Co.), Matsumoto Microsphere, z.B. Microsphere F-30E (Matsumoto Yushi Seiyaku Co. Ltd.) und dergleichen.

Die Menge des Füllstoffs F) in der oder einer erfindungsgemäßen Verstärkungsschicht ist im allgemeinen kritisch. Liegt der Anteil an Mikrohohlkugeln F) unterhalb von 0,1 Gew.-% bezogen auf die Summe aller Bestandteile des (Meth)acrylat-Systems, so treten die erfindungsgemäßen Effekte nicht ausgeprägt genug hervor, insbesondere werden die physikalischen Eigenschaften nicht ausreichend verbessert. Ein Einsatz der Mikropartikel, die vorzugsweise aus Kunststoff sind, bezogen auf die Summe A)-F) über 50 Gew.-% ist im allgemeinen nicht ratsam, da kein im Verhältnis zum zusätzlichen Kostenaufwand stehender Effekt hinsichtlich der Verbesserung der physikalischen Eigenschaften der. Verstärkungsschicht erreichbar scheint.

In einer besonderen Ausgestaltung des erfindungsgemäßen Sanitärartikels weist dieser den Füllstoff F) im (Meth)acrylat-System oder im ersten und/oder zweiten (Meth)acrylat-System in einer Menge im Bereich von 1 bis 25 Gew.-%, bezogen auf das Gewicht der Summe der Bestandteile A)-F), auf.

Des weiteren ist es besonders vorteilig, wenn der Sanitärartikel den Füllstoff F) im (Meth)acrylat-System oder im ersten und/oder zweiten (Meth)acrylat-System in einer Menge im Bereich von 2 bis 15 Gew.-%, bezogen auf das Gewicht der Summe der Bestandteile A)-F), aufweist.

Noch eine bevorzugte Ausführungsform sieht vor, daß der Sanitärartikel gemäß der Erfindung sich dadurch kennzeichnet, daß der Füllstoff F) im (Meth)acrylat-System oder im ersten und/oder zweiten (Meth)acrylat-System in einer Menge im Bereich von 3 bis 10 Gew.-%, bezogen auf das Gewicht der Summe der Bestandteile A)-F), enthalten ist.

### Zweite Variante: Zwei- oder mehrschichtige Verstärkung

Im Hinblick auf die Natur des Füllstoffs F) gilt grundsätzlich dasselbe, was bei der einschichtigen Variante ausgeführt wurde. Wichtig ist, daß erfindungsgemäße zweioder mehrschichtige Hinterfütterungen in wenigstens einer Schicht die Mikrohohlkugeln F) aufweisen. Dementsprechend können aber auch in jeder einzelnen Schicht diese Mikrohohlkugeln enthalten sein. Bevorzugt sind die Partikel F) in der ersten Hinterfütterungsschicht, i.e. diejenige Schicht, welche direkt als erste Schicht auf das Acrylglasformteil aufgebracht wird.

Innerhalb der angegebenen Grenzen kann der Fachmann die Bestandteile mit einfachen Versuchen so nach Art und Menge auswählen, daß er eine der DIN EN 198 gehorchende einschichtige Hinterfütterung erhält oder für den Fall einer zweischichtigen Hinterfütterung eine erste Hinterfütterungsschicht, welche dem Sanitärartikel die erforderliche Schlagzähigkeit vermittelt, und daß er eine zweite Hinterfütterungsschicht erhält, welche dem Sanitärartikel die notwendige Steifigkeit verleiht.

Die gesamte Verstärkung ist üblicherweise 1,5 bis 10 mm dick. Zwei Schichten zusammen sind i. d. R. ebenso etwa 1,5 bis 10 mm dick. Es ist hierbei von Vorteil, die erste Schicht dünner und die zweite Schicht dicker als die erste Schicht auszubilden. Vorteilhaft ist die zweite Schicht etwa 2 bis 3 x so dick wie die erste. Vorteilig ist die gesamte Verstärkung in jedem Fall 1,5 bis <8 mm dick.

Zweckmäßig weist die erste Schicht eine Dicke im Bereich von 0,5 - 2,5 mm und die zweite Schicht eine Dicke im Bereich von 3 - <5,5 mm auf.

Dabei war es besonders erstaunlich, daß es mit einer erfindungsgemäßen ein- oder zweischichtigen Hinterfütterung gelang, ausreichend verstärkte Sanitärartikel ohne Glasfaserverstärkung zu erzeugen.

Üblicherweise bilden die Glasfaserhäcksel in der fertigen Hinterfütterungsschicht gemäß dem Stand der Technik ein Gewirre aus.

Dieser Verfilzungseffekt wurde bislang als unumgänglich betrachtet, um eine mechanisch ausreichend feste Verstärkung zu erhalten. Um so überraschender ist die Erfindung zu beurteilen.

Zur vorliegenden Erfindung gehört auch ein Verfahren zur Herstellung eines glasfaser- und asbestfreien, hinterfütterten Sanitärartikels, bei dem ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet, wobei das Verfahren dadurch gekennzeichnet ist, daß ein überwiegend auf (Meth)acrylaten basierendes Harzsystem verwendet wird, das zu einem Polymer mit einer Glasumwandlungstemperatur Tg > 70 °C aushärtet und bezogen auf 1 Gew.-Teil des Harzsystems bis zu 2,33 Gew.-Teile solcher Füllstoffe aufweist, die unter den Bedingungen der Depolymerisation des Acrylglasformteils inert sind, wobei das Harzsystem die hierin angegebene Zusammensetzung aufweist.

Bevorzugt wird das Verfahren so ausgeführt, daß zwei voneinander verschiedene, überwiegend auf (Meth)acrylaten basierende Harzsysteme nacheinander verwendet werden, die jeweils zu einem Polymer mit einer Glasumwandlungstemperatur Tg > 70 °C aushärten und bezogen auf 1 Gew.-Teil des Harzsystems bis zu 2,33 Gew.-Teile solcher Füllstoffe aufweisen können, die unter den Bedingungen der Depolymerisation des Acrylglasformteils inert sind, wobei auf das Acrylglasformteil zunächst ein erstes Harzsystem aufgesprüht wird, welches die erforderliche Schlagzähigkeit vermittelt, und nach dessen Aushärtung darauf ein zweites Harzsystem aufgesprüht wird, das die notwendige Steifigkeit verleiht.

Aus der EP-A-0 693 503 ist es bekannt, ein auf (Meth)acrylaten basierendes Harzsystem im Sprühverfahren aufzubringen. In Analogie hierzu werden in einer bevorzugten erfindungsgemäßen Variante zwei Schichten nacheinander aufgebracht, wobei zusätzlich bei der Auswahl der möglichen Füllstoffe auf deren Unschädlichkeit in der Depolymerisation der Polymerisate geachtet wird, durch eine sorgfältige Abstimmung von Materialauswahl (sowohl Formteil als auch Hinterfütterung basieren auf (Meth)acrylaten, Füllstoffe sind inert) und Aufbringverfahren der Hinterfütterungsschichten ein hundertprozentig recyclebares Produkt zugänglich wird, das gleichzeitig in Folge des Sprühverfahrens besonders materialsparend und einfach herstellbar ist.

Außerdem und vor allem werden in allen, sei es in einer oder in beiden oder mehreren Schichten Glasfasern vermieden.

Bevorzugt zeichnet sich das Verfahren der Erfindung dadurch aus, daß als erstes Harzsystem ein polymerisierbares, kalthärtendes, reaktives (Meth)acrylat-System verwendet wird, welches

| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 10 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Teil A) 0,05 - 5 Teile eines in A) löslichen oder quellbaren (Pre)polymers | | |
| | | | |
| | | | |
| C) | ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | Füllstoffe, bezogen auf die Summe A) - E) | | 0 - 75 Gew.-%, |
| | wobei die Füllstoffe eine Partikelgröße ≤ 100 µm aufweisen | | |
| | | | |
| F) | mit inertem Gas gefüllte hohle Mikropartikel, vorzugsweise aus Kunststoff, bezogen auf die Summe A) - F) | | 0,1 - 50 Gew.-% |

enthält.

Weiterhin ist es bevorzugt, daß als zweites Harzsystem ein polymerisierbares, kalthärtendes, reaktives (Meth)acrylat-System verwendet wird, welches

| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 0 - <10 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Teil A) 0,05 - 5 Teile eines in A) löslichen oder quellbaren (Pre)polymers | | |
| | | | |
| | | | |
| C) | ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | Füllstoffe, bezogen auf die Summe A) - E) | | 0 - 75 Gew.-%, |
| | wobei die Füllstoffe eine Partikelgröße < 100 µm aufweisen | | |
| | | | |
| F) | mit inertem Gas gefüllte hohle Mikropartikel aus Kunststoff, bezogen auf die Summe A) - F) | | 0,1 - 50 Gew.-% |

enthält.

Um das Absetzverhalten der Füllstoffe E) bei längeren Lagerzeiten vor Gebrauch zu verbessern und damit die Lagerstabilität zu erhöhen, ist es bevorzugt, daß die Füllstoffe E) vor Verwendung des reaktiven Harzsystems mit einem Homogenisierungsaggregat unter Zusatz eines Thixotropiermittels in einer Menge von 0,01 - 0,5 Teile bezogen auf 1 Teil E) in das erste und/oder zweite System aus Bindemittel A) - D) eingearbeitet werden.

Durch Verwendung eines geeigneten Homogenisierungsaggregats bei der Herstellung des Harzsystems werden außerdem die Größe und die Form der Füllstoffpartikel positiv beeinflußt.

Die erfindungsgemäßen hinterfütterten Sanitärartikel lassen sich nacheinander durch Aufsprühen oder -spritzen eines Harzsystems A) bis F) oder der jeweiligen Harzsysteme A) bis F) auf die Rückseite des Acrylglasformteils herstellen.

Hierbei werden jeweils bevorzugt während des Sprühens zwei Materialströme miteinander gemischt, wobei ein erster der Materialströme die polymerisierbaren Bestandteile der Harzmischung und ein zweiter Materialstrom die bis zur Polymerisation von den polymerisierbaren Bestandteilen des Harzsystems getrennt zu haltenden Bestandteile der Komponente C) des Harzsystems aufweist.

Zum Aufsprühen werden bevorzugt Hochdruck-Airless-Spritzanlagen (z. B. Aplicator IP 8000 der Fa. ESSKA, Hamburg), Flächenstrahl-Spritzanlagen der Fa. Glascraft oder Zwei-Komponenten-Dosier- und Mischanlage mit Arbeitsdruck 40 bis 60 bar (z.B. "Twin-Injektion" der Firma Reinhardt Technik, Kierspe) verwendet. Unter Verwendung solcher Anlagen lassen sich insbesondere im Fächerstrahlverfahren Beschichtungen unter gleichzeitiger deutlicher Verminderung der Emissions-Werte aufbringen. Dies kann vorteilhaft mit Sprühpistolen geschehen, die eine individuelle Regelung des verlustfreien Laminatauftrags ermöglichen.

Besonders geeignete Misch- und Zerstäubungsverfahren sind Gegenstand der EP 38 481.

Das Verfahren der Erfindung zeichnet sich insbesondere dadurch aus, daß es bei Umgebungstemperatur durchgeführt werden kann, d. h. üblicherweise zwischen 0 und 35 °C, aber auch, sofern gewünscht, bei extremeren Temperaturen wie -10 bis +45 °C.

Im folgenden wird die Erfindung anhand von Ausführungsbeispielen und Vergleichsbeispielen näher erläutert.

### Vergleichsbeispiel 1 (VB1) :

Einschichtige Verstärkung ohne Mikrohohlkugeln, ca. 3 mm Dicke

| | |
|---|---|
| 40,00 Gew.-Teile eines Bindemittels bestehend aus | |
| 18,00 % | Polymethylmethacrylat |
| 75,00 % | Methylmethacrylat |
| 5,00 % | Triethylenglykoldimethacrylat |
| 0,50 % | Paraffine (Schmelzpunkt <56 °C) |
| 0,50 % | Dimethylparatoluidin |
| 0,50 % | Diisopropoxyparatoluidin |
| 0,50 % | Additive, Stabilisatoren |

werden mit 60,00 Gew.-Teilen Glimmer (<100 µm) und
0,10 Gew.-Teilen Thixotropierungsmittel (Byk 410)
über 4 Stunden verrührt.

Die Mischung weist eine Viskosität von 11000 - 13000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt 6 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

### Vergleichsbeispiel 2 (VB2):

Zweischichtige Verstärkung mit Verstärkungsschicht 1 a, allerdings beide Schichten ohne Mikrohohlkugeln, gemeinsame Stärke der beiden Schichten zusammen etwa 6 mm;
(i) Verstärkungsschicht 1 a

| | |
|---|---|
| 40,00 Gew.-Teile eines Bindemittels bestehend aus | |
| 30,00 % | Polymethylmethacrylat |
| 42,00 % | Methylmethacrylat |
| 25,70 % | 2-Ethylhexylacrylat |
| 0,50 % | Triethylenglykoldimethacrylat |
| 0,80 % | Diisopropylolparatoluidin |
| 0,70 % | Dimethylparatoluidin |
| 0,30 % | Paraffine (Schmelzpunkt <56 °C) |

werden mit
60,00 Gew.-Teilen Calciumcarbonat (<100 µm) und
0,10 Gew.-Teilen Thixotropierungsmittel (Byk 410)
über 4 Stunden verrührt.
Die Mischung weist eine Viskosität von 6000 - 10000 mPas auf.
Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Eine manuelle Nachbearbeitung ist nicht erforderlich. Die Auftragsmenge beträgt 2 - 4 kg/m².
Bei Härterdosierung 100 : 2 beträgt die Aushärtungszeit 15 - 40 min.
Bei Härterdosierung 100 : 5 beträgt die Aushärtungszeit 5 - 20 min.
Anschließend erfolgt ein zweiter Spritzauftrag mit folgender Mischung:
(ii) Verstärkungsschicht 1 :

| | |
|---|---|
| 40,00 Gew.-Teile eines Bindemittels bestehend aus | |
| 18,00 % | Polymethylmethacrylat |
| 75,00 % | Methylmethacrylat |
| 5,00 % | Triethylenglykoldimethacrylat |
| 0,50 % | Paraffine (Schmelzpunkt <56 °C) |
| 0,50 % | Dimethylparatoluidin |
| 0,50 % | Diisopropylolparatoluidin |
| 0,50 % | Additive, Stabilisatoren |

werden mit
60,00 Gew.-Teilen Glimmer (<100 µm)
0,10 Gew.-Teilen Thixotropierungsmittel (Byk 410)
über 4 Stunden verrührt.
Die Mischung weist eine Viskosität von 11000 - 13000 mPas auf.
Die Härterdosierung beträgt 100 : 2 bis 100 : 5.
Der Spritzdruck beträgt 180 bar.
Die Auftragsmenge beträgt 6 - 10 kg/m².
Die Aushärtungszeit beträgt 15 - 30 min bei Härterdosierung 100 : 2.
Bei Härterdosierung 100 : 5 beträgt die Aushärtungszeit etwa 5 - 15 min.

### Beispiel 3 (B3) :

Einschichtige Verstärkung mit Mikrohohlkugeln, Dicke der Hinterfütterungsschicht ca. 3 mm;

| | |
|---|---|
| 40,00 Gew.-Teile eines Bindemittels bestehend aus | |
| 18,00 % | Polymethylmethacrylat |
| 75,00 % | Methylmethacrylat |
| 5,00 % | Triethylenglykoldimethacrylat |
| 0,50 % | Paraffine (Schmelzpunkt <56 °C) |
| 0,50 % | Dimethylparatoluidin |
| 0,50 % | Diisopropoxyparatoluidin |
| 0,50 % | Additive, Stabilisatoren |

werden mit
54,00 Gew.-Teilen Glimmer (<100 µm)
6,00 Gew.-Teilen gasgefüllte mit Calciumcarbonat beschichtete Mikrohohlkugeln aus Acrylnitril-Copolymer mit einer mittleren Partikelgröße von etwa 95 µm vom Typ ®Dualite 6032 der Fa. Pierce & Stevens Corporation und
0,10 Gew.-Teilen Thixotropierungsmittel (Byk 410)
über 4 Stunden verrührt.

Die Mischung weist eine Viskosität von 11000 - 13000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt etwa 4 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

### Beispiel 4 (B4) :

Zweischichtige Verstärkung mit Verstärkungsschicht 1 a, erste Verstärkungsschicht 1a mit Mikrohohlkugeln, zweite Verstärkungsschicht ohne Mikrohohlkugeln, Dicke jeder Verstärkungsschicht etwa 1,5 mm, Dicke der gesamten Verstärkung etwa 3 mm;
(i) Verstärkungsschicht 1 a

| | |
|---|---|
| 40,00 Gew.-Teile eines Bindemittels bestehend aus | |
| 30,00 % | Polymethylmethacrylat |
| 42,00 % | Methylmethacrylat |
| 25,70 % | 2-Ethylhexylacrylat |
| 0,50 % | Triethylenglykoldimethacrylat |
| 0,80 % | Diisopropylolparatoluidin |
| 0,70 % | Dimethylparatoluidin |
| 0,30 % | Paraffine (Schmelzpunkt <56 °C) |

werden mit
54,00 Gew.-TeilenGlimmer (<100 µm)
6,00 Gew.-Teilengasgefüllte mit Calciumcarbonat beschichtete Mikrohohlkugeln aus Acrylnitril-Copolymer mit einer mittleren Partikelgröße von etwa 95 µm vom Typ ®Dualite 6032 der Fa. Pierce & Stevens Corporation und
0,10 Gew.-Teilen Thixotropierungsmittel (Byk 410)
über 4 Stunden verrührt.
Die Mischung weist eine Viskosität von 6000 - 10000 mPas auf.
Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Eine manuelle Nachbearbeitung ist nicht erforderlich. Die Auftragsmenge beträgt etwa 2 - 3,5 kg/m².
Bei Härterdosierung 100 : 2 beträgt die Aushärtungszeit 15 - 40 min.
Bei Härterdosierung 100 : 5 beträgt die Aushärtungszeit 5 - 20 min.
Anschließend erfolgt ein zweiter Spritzauftrag mit folgender Mischung:
(ii) Verstärkungsschicht 1 :

| | |
|---|---|
| 40,00 Gew.-Teile eines Bindemittels bestehend aus | |
| 18,00 % | Polymethylmethacrylat |
| 75,00 % | Methylmethacrylat |
| 5,00 % | Triethylenglykoldimethacrylat |
| 0,50 % | Paraffine (Schmelzpunkt <56 °C) |
| 0,50 % | Dimethylparatoluidin |
| 0,50 % | Diisopropylolparatoluidin |
| 0,50 % | Additive, Stabilisatoren |

werden mit
60,00 Gew.-Teilen Glimmer (<100 µm)
0,10 Gew.-Teilen Thixotropierungsmittel (Byk 410)
über 4 Stunden verrührt.
Die Mischung weist eine Viskosität von 11000 - 13000 mPas auf.
Die Härterdosierung beträgt 100 : 2 bis 100 : 5.
Der Spritzdruck beträgt 180 bar.
Die Auftragsmenge beträgt 2 - 3,5 kg/m².
Die Aushärtungszeit beträgt 15 - 30 min bei Härterdosierung 100 : 2.
Bei Härterdosierung 100 : 5 beträgt die Aushärtungszeit etwa 5 - 15 min.

Nach der Aushärtung werden die kompletten Wannen den Prüfungen nach DIN EN 198 und die Prüfkörper, die aus den fertigen Wannen herausgeschnitten werden, den Prüfungen nach DIN ISO 4624, DIN ISO 178 und DIN ISO 179 unterzogen. Verwendet wurden die Vorschriften aus den jeweils im Jahr 1996 geltenden Vorschriften.

Bei der Prüfung im Warmwasserwechseltest nach DIN EN 198 wird eine Wanne wechselnd mit Wasser von 75 °C und dann von 12 °C befüllt. Die DIN EN 198 fordert das schadlose Bestehen von 100 solcher Zyklen. Das Bestehen beinhaltet, daß der Zustand der Wannen keine Ablösung der Verstärkung sowie keine Risse im Acrylglas aufweist.

Das Verhalten bei Stoßbeanspruchung gemäß Kugelfalltest nach DIN EN 198 gilt dann als akzeptabel, wenn keine Beschädigungen der Oberfläche und der Unterseite einer Wanne nach Fall einer Stahlkugel von 200 g aus einer Höhe von 1 m auf den Wannenboden auftreten.

Diese und die weiteren Ergebnisse können der Tabelle 1 entnommen werden.

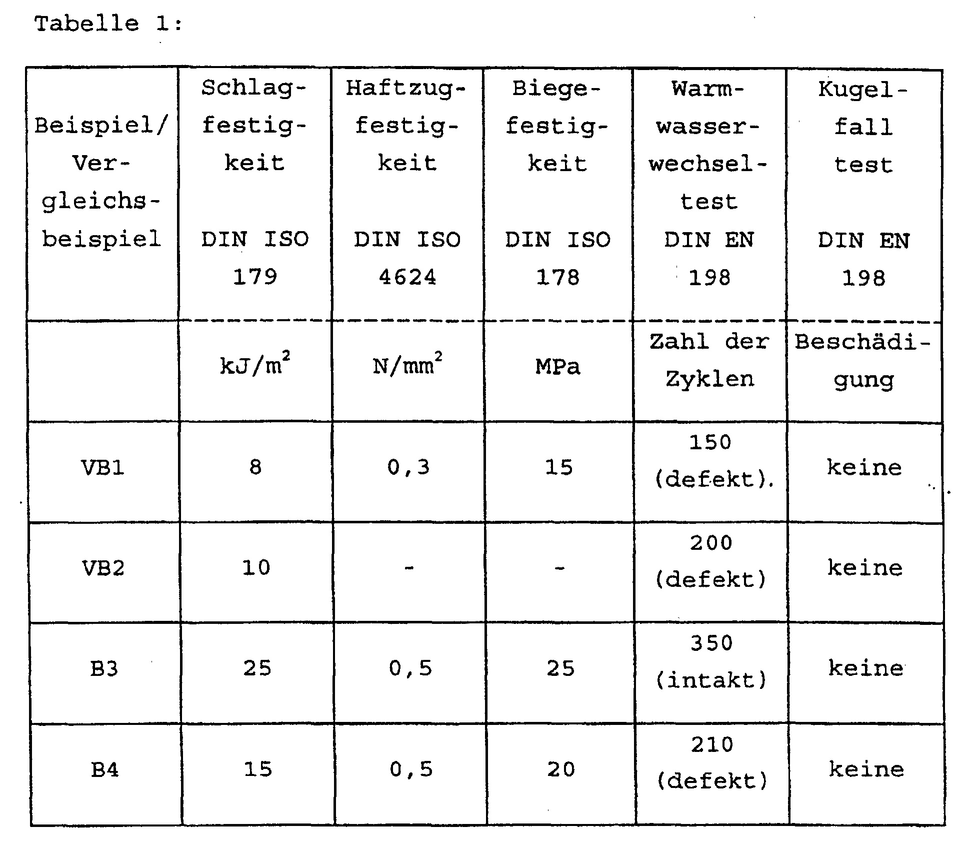

## Patentansprüche

1. Hinterfütterter Sanitärartikel, aufweisend ein Acrylglasformteil, das an seiner Rückseite mit glasfaser- und asbestfreiem, 1,5 bis 10 mm dickem Polymermaterial verstärkt ist, welches ohne zusätzliche Haftvermittler fest mit dem Acrylglasformteil verbunden ist,
**dadurch gekennzeichnet,**
**daß** das verstärkende Polymermaterial durch Aushärtung eines auf die Rückseite des Acrylglasformteils aufgesprühten polymerisierbaren, kalthärtenden, reaktiven (Meth)acrylat-Systems erhältlich ist, welches
| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 0 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Gew.-Teil A) 0,05 - 5 Gew.-Teile eines in A) löslichen oder quellbaren (Pre)polymers | | |
| | | | |
| C) | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | unter den Bedingungen der Depolymerisation des Acrylglases inerte Füllstoffe bezogen auf die Summe A) - E) mit einer Feinheit ≤ 100 µm | | 0 - 75 Gew.-% |
| | | | |
| F) | mit inertem Gas gefüllte hohle Mikropartikel aus Kunststoff, bezogen auf die Summe A) - F) | | 0,1 - 50 Gew.-% |
enthält.

2. Sanitärartikel nach Anspruch_1,
**dadurch gekennzeichnet,**
**daß** das Verstärkungsmaterial aus einer ersten und einer zweiten Schicht besteht, wobei die erste Schicht durch Aushärtung eines auf die Rückseite des Acrylglasformteils aufgesprühten polymerisierbaren, kalthärtenden, reaktiven, ersten (Meth)acrylat-Systems erhältlich ist,
welches
| | | | |
|---|---|---|---|
| A) | a) | (Meth)acrylat | 30 - 100 Gew.-% |
| | | a1) Methyl(meth)acrylat | 0 - 100 Gew.-% |
| | | a2)C₂-C₄ (Meth)acrylat | 0 - 100 Gew.-% |
| | | a3) ≥ C₅ (Meth)acrylat | 10 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Gew.-Teil A) 0,05 - 5 Gew.-Teile eines in A) löslichen oder quellbaren (Pre)polymers | | |
| | | | |
| C) | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | unter den Bedingungen der Depolymerisation des Acrylglases inerte Feinstfüllstoffe bezogen auf die Summe A) - E) mit einer Feinheit ≤ 100 µm | | 0 - 75 Gew.-% |
| | | | |
| F) | mit inertem Gas gefühlte hohle Mikropartikel aus Kunststoff, bezogen auf die Summe A) - F) | | 0,1 - 50 Gew.-% |
enthält,
und die zweite Schicht durch Aushärtung eines auf die erste Schicht aufgesprühten, polymersisierbaren, kalthärtenden, reaktiven, zweiten (Meth)acrylat-Systems erhältlich ist, welches vom ersten (Meth)acrylat-System verschieden ist, wobei auf das zweite (Meth)acrylat-System bis auf die Komponente a3), i.e. bis auf den Gehalt an ≥ C₅ (Meth)acrylat, der 0 bis < 10 Gew.-% beträgt, und bis auf die Komponente F), die bezogen auf die Summe A)-F) in einer Menge von 0-50 Gew.-% vorhanden ist, dieselbe allgemeine Definition zutrifft wie auf das erste (Meth)acrylat-System.

3. Sanitärartikel nach Anspruch 1 oder 2,
**dadurch gekennzeichnet,**
**daß** der Füllstoff F) aus gasgefüllten, expandierten Mikrohohlkugeln aus Kunststoff besteht.

4. Sanitärartikel nach Anspruch 3,
**dadurch gekennzeichnet,**
**daß** die Mikrohohlkugeln mit Calciumcarbonat beschichtet sind.

5. Sanitärartikel nach einem oder mehreren der vorhergehenden Ansprüche,
**dadurch gekennzeichnet,**
**daß** der Füllstoff F) im (Meth)acrylat-System oder im ersten und/oder zweiten (Meth)acrylat-System in einer Menge im Bereich von 1 bis 25 Gewichtsprozent, bezogen auf das Gewicht der Summe der Bestandteile A) bis F), enthalten ist.

6. Sanitärartikel nach einem oder mehreren der vorhergehenden Ansprüche 1 bis 4,
**dadurch gekennzeichnet,**
**daß** der Füllstoff F) im (Meth)acrylat-System oder im ersten und/oder zweiten (Meth)acrylat-System in einer Menge im Bereich von 2 bis 15 Gewichtsprozent, bezogen auf das Gewicht der Summe der Bestandteile A) bis F), enthalten ist.

7. Sanitärartikel nach einem oder mehreren der vorhergehenden Ansprüche 1 bis 4,
**dadurch gekennzeichnet,**
**daß** der Füllstoff F) im (Meth)acrylat-System oder im ersten und/oder zweiten (Meth)acrylat-System in einer Menge im Bereich von 3 bis 10 Gewichtsprozent, bezogen auf das Gewicht der Summe der Bestandteile A) bis F), enthalten ist.

8. Sanitärartikel nach Anspruch 1 oder 2,
**dadurch gekennzeichnet,**
**daß** die Füllstoffe E) Glimmer, Aluminiumhydroxid, Calciumcarbonat, Kreide, Marmor, Quarzit, Wollastonit und/oder Cristobalit sind.

9. Sanitärartikel nach Anspruch 1,
**dadurch gekennzeichnet,**
**daß** der Füllstoff E) im (meth)acrylat-System Glimmer ist.

10. Sanitärartikel nach Anspruch 2,
**dadurch gekennzeichnet,**
**daß** der Füllstoff E) im ersten und zweiten (Meth)acrylat-System Glimmer ist.

11. Sanitärartikel nach einem oder mehreren der vorhergehenden Ansprüche,
**dadurch gekennzeichnet,**
**daß** die Füllstoffe E) im (Meth)acrylat-System oder im ersten und/oder zweiten (Meth)acrylat-System in einer Menge von 40 - 65 Gew.-%, bevorzugt 50 - 60 Gew.-%, bezogen auf die Summe A) - E), enthalten sind.

12. Sanitärartikel nach einem oder mehreren der vorhergehenden Ansprüche,
**dadurch gekennzeichnet,**
**daß** das (Meth)acrylat- oder die (Meth)acrylat-Systeme die Komponenten B) : A) in einem Gewichtsverhältnis im Bereich von 0,1 : 1 bis 2 : 1 aufweisen.

13. Sanitärartikel nach Anspruch 12,
**dadurch gekennzeichnet,**
**daß** das Gewichtsverhältnis von B) : A) im Bereich von 0,2 : 1 bis 1 : 1 ist.

14. Sanitärartikel nach einem der vorhergehenden Ansprüche,
**dadurch gekennzeichnet,**
**daß** B) eine durch Syspensionspolymerisation erhältliche PMMA-Lackperle, ein Emulsionspolymerisat und/oder Mahlgut aus einem Recyclingprozess mit einem mittleren Teilchendurchmesser bis 0,8 mm ist.

15. Sanitärartikel nach Anspruch 14 soweit dieser auf Anspruch 2 oder einen darauf rückbezogenen Anspruch Bezug nimmt,
**dadurch gekennzeichnet,**
**daß** das Prepolymer B) der ersten Verstärkungsschicht einen Comonomerghalt zwischen 30 und 80 Gew.-%, das der zweiten Verstärkungsschicht zwischen 0 und <30 Gew.-% aufweist.

16. Sanitärartikel nach Anspruch 15,
**dadurch gekennzeichnet,**
**daß** das Comonomer Methylacrylat, Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat und/oder Hydroxypropylmethacrylat ist.

17. Sanitärartikel nach einem oder mehreren der vorhergehenden Ansprüche,
**dadurch gekennzeichnet,**
**daß** im (Meth)acrylat-System oder im ersten und/oder zweiten (Meth)acrylat-System bezogen auf 1 Gew.-Teil E) oder F) bis 0,5 Teile Thixotropiermittel enthalten sind.

18. Sanitärartikel nach einem oder mehreren der vorhergehenden Ansprüche,
**dadurch gekennzeichnet,**
**daß** bei Vorliegen von zwei Verstärkungsschichten die erste Schicht eine Dicke von 0,5 - 2,5 mm und die zweite Schicht eine Dicke im Bereich von 2,5 - <5,5 mm aufweisen.

19. Verfahren zur Herstellung eines glasfaser- und asbestfreien, hinterfütterten Sanitärartikels gemäß den Ansprüchen 1 bis 18, bei dem wenigstens ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet,
**dadurch gekennzeichnet,**
**daß** ein auf (Meth)acrylaten basierendes Harzsystem verwendet wird, das zu einem Polymer mit einer Glasumwandlungstemperatur Tg > 70 °C aushärtet und bezogen auf 1 Gew.-Teil des jeweiligen Harzsystems bis zu 2,33 Gew.-Teile solcher Füllstoffe aufweist, die unter den Bedingungen der Depolymerisation des Acrylglasformteils inert sind, wobei das (Meth)acrylat-System die in Anspruch 1 angegebene Zusammensetzung aufweist.

20. Verfahren nach Anspruch 19,
**dadurch gekennzeichnet,**
**daß** zwei voneinander verschiedene überwiegend auf (Meth)acrylaten basierende Harzsysteme verwendet werden, die jeweils zu einem Polymer mit einer Glasumwandlungstemperatur Tg > 70 °C aushärten und bezogen auf 1 Gew.-Teil des jeweiligen Harzsystems bis zu 2,33 Gew.-Teile solcher Füllstoffe aufweisen können, die unter den Bedingungen der Depolymerisation des Acrylglasformteils inert sind, wobei auf das Acrylglasformteil zunächst ein erstes Harzsystem aufgesprüht wird, welches die erforderliche Schlagzähigkeit vermittelt, und nach dessen Aushärtung darauf ein zweites Harzsystem aufgesprüht wird, das die notwendige Steifigkeit verleiht.

21. Verfahren nach Anspruch 20,
**dadurch gekennzeichnet,**
**daß** als erstes Harzsystem ein polymerisierbares, kalthärtendes, reaktives (Meth)acrylat-System verwendet wird, welches
| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 10 - 50 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Teil A) 0,05 - 5 Teile eines in A) löslichen oder quellbaren (Pre)polymers | | |
| | | | |
| C) | ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | Füllstoffe, bezogen auf die Summe A) - E) | | 0 - 75 Gew.-%, |
| | wobei die Füllstoffe eine Partikelgröße ≤ 100 µm aufweisen, | | |
| | | | |
| F) | mit inertem Gas gefüllte hohle Mikropartikel aus Kunststoff, bezogen auf die Summe A) - F) | | 0,1 - 50 Gew.-% |
enthält.

22. Verfahren nach Anspruch 20 oder 21,
**dadurch gekennzeichnet,**
**daß** als zweites Harzsystem ein polymerisierbares, kalthärtendes, reaktives (Meth)acrylat-System verwendet wird, welches
| | | | |
|---|---|---|---|
| A) | a) | (Meth)acrylat | 30 - 100 Gew.-% |
| | | a1) Methyl(meth)acrylat | 0 - 100 Gew.-% |
| | | a2) C₂-C₄ (Meth)acrylat | 0 - 100 Gew.-% |
| | | a3) ≥ C₅ (Meth)acrylat | 0 - <10 Gew.-% |
| | | a4) mehrwertige (Meth)acrylate | 0 - 50 Gew.-% |
| | b) | Comonomere | 0 - 50 Gew.-% |
| | | b1) Vinylaromaten | 0 - 30 Gew.-% |
| | | b2) Vinylester | 0 - 30 Gew.-% |
| | | | |
| B) | auf 1 Teil A) 0,05 - 5 Teile eines in A) löslichen oder quellbaren (Pre)polymers | | |
| | | | |
| C) | ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | | |
| | | | |
| D) | übliche Additive | | |
| | | | |
| E) | Füllstoffe, bezogen auf die Summe A) - E) | | 0 - 75 Gew.-%, |
| | wobei die Füllstoffe eine Partikelgröße < 100 µm aufweisen | | |
| | | | |
| F) | mit inertem Gas gefüllte hohle Mikropartikel aus Kunststoff, bezogen auf die Summe A) - F) | | 0 - 50 Gew.-% |
enthält.

23. Verfahren nach Anspruch 21 oder 22,
**dadurch gekennzeichnet,**
**daß** die Füllstoffe E) vor Verwendung der reaktiven Harzsysteme mit einem Homogenisierungsaggregat unter Zusatz eines Thixotropiermittels in einer Menge von 0,01 - 0,5 Teile bezogen auf 1 Teil E) in das erste und/oder zweite System aus jeweiligem Bindemittel A) - D) eingearbeitet werden.

24. Verfahren nach einem der Ansprüche 21 - 23,
**dadurch gekennzeichnet,**
**daß** als Füllstoffe E) Aluminiumhydroxid, Calciumcarbonate wie Kreide oder Marmor, Schwerspat und/oder Quarzite wie Wollastonit, Cristobalit, amorphe Silicate, Flugasche und/oder Glimmer verwendet werden.

25. Verfahren nach Anspruch 22 oder 23,
**dadurch gekennzeichnet,**
**daß** als Füllstoff E) Glimmer verwendet wird.

26. Verfahren nach einem oder mehreren der Ansprüche 20 bis 25,
**dadurch gekennzeichnet,**
**daß** die Harzsysteme nacheinander auf die Rückseite des Acrylglasformteils aufgesprüht werden, wobei während des Sprühens jeweils zwei Materialströme miteinander gemischt werden und wobei ein erster der Materialströme die polymerisierbaren Bestandteile der Harzmischung und ein zweiter Materialstrom die bis zur Polymerisation von den polymerisierbaren Bestandteilen des Harzsystems getrennt zu haltenden Bestandteile der Komponente C) des Harzsystems aufweist.

## Claims

1. Back-filled sanitaryware, comprising an acrylic glass moulding which is reinforced on the reverse side with polymer material 1.5 to 10 mm thick, free from fibreglass and asbestos, which is fixedly connected to the acrylic glass moulding without any additional adhesive agents, **characterised in that** the reinforcing polymer material may be obtained by curing a polymerisable, cold-curing reactive (meth)acrylate system sprayed on to the reverse of the acrylic glass moulding, which contains
| | | | |
|---|---|---|---|
| A) | a) | (meth)acrylate | 30 - 100 wt.% |
| | | a1) methyl (meth)acrylate | 0 - 100 wt.% |
| | | a2) C₂₋₄ (meth)acrylate | 0 - 100 wt.% |
| | | a3) ≥C₅ (meth)acrylate | 0 - 50 wt.% |
| | | a4) polyvalent (meth)acrylates | 0 - 50 wt.% |
| | b) | comonomers | 0 - 50 wt.% |
| | | b1) aromatic vinyl compounds | 0 - 30 wt.% |
| | | b2)vinyl esters | 0 - 30 wt.% |
| | | | |
| B) | to 1 part by weight of A), 0.05 - 5 parts by weight of a (pre)polymer which is soluble or capable of swelling in A) | | |
| | | | |
| C) | a redox system which is to be kept wholly or partly separate from the components of the system which are to be polymerised, until the moment of polymerisation, containing an accelerator and a peroxidic catalyst or initiator in a quantity sufficient for the cold curing of component A) | | |
| | | | |
| D) | conventional additives | | |
| | | | |
| E) | fillers which are inert under the conditions of depolymerisation of the acrylic glass, based on the sum of A) - E), with a fineness ≤ 100 µm | | 0 - 75 wt.% |
| | | | |
| | | | |
| F) | hollow microparticles of plastics filled with inert gas, based on the sum of A) - F) | | 0.1 - 50 wt.%. |

2. Sanitaryware according to claim 1, **characterised in that** the reinforcing material consists of a first and second layer, the first layer being obtainable by curing a polymerisable, cold-curing, reactive, first (meth)acrylate system sprayed on to the reverse of the acrylic glass moulding, which contains
| | | | |
|---|---|---|---|
| A) | a) | (meth)acrylate | 30 - 100 wt.% |
| | | a1)methyl (meth)acrylate | 0 - 100 wt.% |
| | | a2) C₂₋₄ (meth)acrylate | 0 - 100 wt.% |
| | | a3) ≥C₅ (meth)acrylate | 10 - 50 wt.% |
| | | a4) polyvalent (meth)acrylates | 0 - 50 wt.% |
| | b) | comonomers | 0 - 50 wt.% |
| | | b1) aromatic vinyl compounds | 0 - 30 wt.% |
| | | b2) vinyl esters | 0 - 30 wt.% |
| | | | |
| B) | to 1 part by weight of A), 0.05 - 5 parts by weight of a (pre)polymer which is soluble or capable of swelling in A) | | |
| | | | |
| C) | a redox system which is to be kept wholly or partly separate from the components of the system which are to be polymerised, until the moment of polymerisation, containing an accelerator and a peroxidic catalyst or initiator in a quantity sufficient for the cold curing of component A) | | |
| | | | |
| D) | conventional additives | | |
| | | | |
| E) | very fine fillers which are inert under the conditions of depolymerisation of the acrylic glass, based on the sum of A) - E), with a fineness ≤ 100 µm | | 0 - 75 wt.% |
| | | | |
| | | | |
| F) | hollow microparticles of plastics filled with inert gas, based on the sum of A) - F) | | 0.1- 50 wt.%, |
and the second layer may be obtained by curing a polymerisable, cold-curing, reactive, second (meth)acrylate system sprayed on to the first layer, which is different from the first (meth)acrylate system, the same general definitions applying to the second (meth)acrylate system as to the first (meth)acrylate system, apart from component a3), i.e. apart from the content of ≥C₅ (meth)acrylate, which is from 0 to < 10 wt.%, and apart from component F), which is present in an amount of from 0 - 50 wt.%, based on the sum of A)-F).

3. Sanitaryware according to claim 1 or 2, **characterised in that** the filler F) consists of gas-filled expanded hollow plastics microspheres.

4. Sanitaryware according to claim 3, **characterised in that** the microspheres are coated with calcium carbonate.

5. Sanitaryware according to one or more of the preceding claims, **characterised in that** the filler F) is present in the (meth)acrylate system or in the first and/or second (meth)acrylate system in an amount in the range from 1 to 25 percent by weight, based on the weight of the sum of ingredients A) to F).

6. Sanitaryware according to one or more of the preceding claims 1 to 4, **characterised in that** the filler F) is present in the (meth)acrylate system or in the first and/or second (meth)acrylate system in an amount in the range from 2 to 15 percent by weight, based on the weight of the sum of ingredients A) to F).

7. Sanitaryware according to one or more of the preceding claims 1 to 4, **characterised in that** the filler F) is present in the (meth)acrylate system or in the first and/or second (meth)acrylate system in an amount in the range from 3 to 10 percent by weight, based on the weight of the sum of ingredients A) to F).

8. Sanitaryware according to claim 1 or 2, **characterised in that** the fillers E) are mica, aluminium hydroxide, calcium carbonate, chalk, marble, quartzite, wollastonite and/or cristobalite.

9. Sanitaryware according to claim 1, **characterised in that** the filler E) in the (meth)acrylate system is mica.

10. Sanitaryware according to claim 2, **characterised in that** the filler E) in the first and second (meth)acrylate systems is mica.

11. Sanitaryware according to one or more of the preceding claims, **characterised in that** the fillers E) are present in the (meth)acrylate system or in the first and/or second (meth)acrylate system in an amount of from 40 - 65 wt.%, preferably 50 - 60 wt.%, based on the sum of A) to E).

12. Sanitaryware according to one or more of the preceding claims, **characterised in that** the (meth)acrylate system or the (meth)acrylate systems contain the components B) : A) in a weight ratio in the range from 0.1 : 1 to 2 : 1.

13. Sanitaryware according to claim 12, **characterised in that** the weight ratio of B) : A) is in the range from 0.2 : 1 to 1 : 1.

14. Sanitaryware according to one or more of the preceding claims, **characterised in that** b) is a PMMA lacquered pearl, an emulsion polymer and/or ground-up material from a recycling process having a mean particle diameter of up to 0.8 mm.

15. Sanitaryware according to claim 14 in so far as it is dependent on claim 2 or a claim dependent thereon, **characterised in that** the prepolymer B) of the first reinforcing layer has a comonomer content of between 30 and 80 wt.%, that of the second reinforcing layer has a comonomer content of between 0 and <30 wt.%.

16. Sanitaryware according to claim 15, **characterised in that** the comonomer is methyl acrylate, ethyl acrylate, butyl acrylate, 2-ethylhexyl acrylate, ethyl methacrylate, n-butyl methacrylate, i-butyl methacrylate, 2-ethylhexyl methacrylate, propyl acrylate, propyl methacrylate, methacrylic acid, ethyltriglycol methacrylate and/or hydroxypropyl methacrylate.

17. Sanitaryware according to one or more of the preceding claims, **characterised in that** in the (math)acrylate system or in the first and/or second (meth)acrylate system there are up to 0.5 parts of thixotropic agent, based on 1 part by weight of E) or F).

18. Sanitaryware according to one or more of the preceding claims, **characterised in that** when two reinforcing layers are present the first layer has a thickness of 0.5 to 2.5 mm and the second layer has a thickness in the range from 2.5 - <5.5 mm.

19. Process for producing back-filled sanitaryware free from fibreglass and asbestos, according to claims 1 to 18, wherein at least one reactive resin system is sprayed onto the reverse of a moulding made of acrylic glass, in which the resin system cures in contact with the acrylic glass moulding and thereby bonds to the acrylic glass moulding, **characterised in that** a resin system based on (meth)acrylates is used which cures to form a polymer with a glass transition temperature Tg > 70°C and contains, based on 1 part by weight of the resin system, up to 2.33 parts by weight of fillers which are inert under the conditions of depolymerisation of the acrylic glass moulding, the (meth)acrylate system having the composition specified in claim 1.

20. Process according to claim 19, **characterised in that** two different resin systems based predominantly on (meth)acrylates are used, each of which cures to form a polymer with a glass transition temperature Tg > 70°C and each of which may contain, based on 1 part by weight of the particular resin system, up to 2.33 parts by weight of fillers which are inert under the conditions of depolymerisation of the acrylic glass moulding, wherein to begin with a first resin system is sprayed onto the acrylic glass moulding, imparting the necessary impact strength, and after said first resin system has cured a second resin system is sprayed on, imparting the necessary rigidity.

21. Process according to claim 20, **characterised in that** a polymerisable, cold-curing, reactive (meth)acrylate system which contains
| | | | |
|---|---|---|---|
| A) | a) | (meth)acrylate | 30 - 100 wt.% |
| | | a1) methyl (meth)acrylate | 0 - 100 wt.% |
| | | a2) C₂₋₄ (meth)acrylate | 0 - 100 wt.% |
| | | a3) ≥C₅ (meth)acrylate | 10 - 50 wt.% |
| | | a4) polyvalent (meth)acrylates | 0 - 50 wt.% |
| | b) | comonomers | 0 - 50 wt.% |
| | | b1) aromatic vinyl compounds | 0 - 30 wt.% |
| | | b2) vinyl esters | 0 - 30 wt.% |
| | | | |
| B) | to 1 part of A), 0.05 - 5 parts of a (pre)polymer which is soluble or capable of swelling in A) | | |
| | | | |
| C) | a redox system which is to be kept wholly or partly separate from the polymerisable components of the system until the moment of polymerisation, containing an accelerator and a peroxidic catalyst or initiator in a quantity sufficient for the cold curing of component A) | | |
| | | | |
| D) | conventional additives | | |
| | | | |
| E) | fillers, based on the sum of A) - E) the fillers having a particle size ≤ 100 µm, | | 0 - 75 wt.%, |
| | | | |
| F) | hollow microparticles of plastics filled with inert gas, based on the sum of A) - F) | | 0.1 - 50 wt.%, |
is used as the first resin system.

22. Process according to claim 20 or 21, **characterised in that** a polymerisable, cold-curing, reactive (meth)acrylate system which contains
| | | | |
|---|---|---|---|
| A) | a) | (meth)acrylate | 30 - 100 wt.% |
| | | a1) methyl (meth)acrylate | 0 - 100 wt.% |
| | | a2) C₂₋₄ (meth)acrylate | 0 - 100 wt.% |
| | | a3) ≥C₅ (meth)acrylate | 0 - <10 wt.% |
| | | a4) polyvalent (meth)acrylates | 0 - 50 wt.% |
| | b) | comonomers | 0 - 50 wt.% |
| | | b1) aromatic vinyl compounds | 0 - 30 wt.% |
| | | b2) vinyl esters | 0 - 30 wt.% |
| | | | |
| B) | to 1 part of A), 0.05 - 5 parts of a (pre)polymer which is soluble or capable of swelling in A) | | |
| | | | |
| C) | a redox system which is to be kept wholly or partly separate from the polymerisable components of the system until the moment of polymerisation, containing an accelerator and a peroxidic catalyst or initiator in a quantity sufficient for the cold curing of component A) | | |
| | | | |
| D) | conventional additives | | |
| | | | |
| E) | fillers, based on the sum of A) - E) the fillers having a particle size < 100 µm, | | 0 - 75 wt.%, |
| | | | |
| F) | hollow microparticles of plastics filled with inert gas, based on the sum of A) - F) | | 0 - 50 wt.%, |
| | | | |
is used as the second resin system.

23. Process according to claim 21 or 22, **characterised in that** before the reactive resin systems are used the fillers E) are incorporated, by means of a homogenising apparatus, in the first and/or second system of respective binders A) - D) with the addition of a thixotropic agent in an amount of from 0.01 - 0.5 parts, based on 1 part of E).

24. Process according to one of claims 21 - 23, **characterised in that** the fillers E) used are aluminium hydroxide, calcium carbonates such as chalk or marble, barytes and/or quartzites such as wollastonite, cristobalite, amorphous silicates, flue ash and/or mica.

25. Process according to claim 22 or 23, **characterised in that** mica is used as the filler E).

26. Process according to one or more of claims 20 to 25, **characterised in that** the resin systems are sprayed onto the reverse of the acrylic glass moulding one after the other, while during the spraying two currents of material are mixed together and a first of the currents of material comprises the polymerisable ingredients of the resin mixture and a second current of material comprises the ingredients of component C) of the resin system which are to be kept separate until the polymerisable ingredients of the resin system are polymerised.

## Revendications

1. Article sanitaire renforcé par l'arrière, présentant une pièce moulée en verre acrylique, qui est renforcée sur son côté arrière avec un matériau polymère d'une épaisseur de 1,5 à 10 mm dépourvu de fibres de verre et d'amiante, qui est lié solidement sans corps supplémentaire favorisant l'adhérence, avec la pièce moulée en verre acrylique,
**caractérisé en ce que**
on peut obtenir le matériau polymère de renforcement par durcissement d'un système de (méth)acrylate réactif, durcissant à froid, polymérisable, pulvérisé sur le côté arrière de l'article moulé en verre acrylique qui contient
| | | | |
|---|---|---|---|
| A. | a) | (méth)acrylate | 30-100 % en poids |
| | | a1) (méth)acrylate de méthyle | 0-100 % en poids |
| | | a2) (méth)acrylate en C₂ à C₄ | 0-100 % en poids |
| | | a3) (méth)acrylate ≥C₅ | 0-50 % en poids |
| | | a4) (méth)acrylates polyvalents | 0-50 % en poids |
| | b) | Comonomères | 0-50 % en poids |
| | | b1) Aromates vinyliques | 0-30 % en poids |
| | | b2) Esters vinyliques | 0-30 % en poids |
| | | | |
| B. | pour 1 partie en poids de A) 0,05 -5 % en poids d'un (pré)polymère soluble ou gonflable dans A) | | |
| | | | |
| C. | un système redox à maintenir entièrement ou partiellement séparé des constituants du système qui polymérise, et qui contient un accélérateur et un catalyseur ou initiateur comportant un peroxyde, en une quantité suffisant pour le durcissement à froid du composant A), | | |
| | | | |
| D. | des additifs habituels, | | |
| | | | |
| E. | des charges inertes dans les conditions de la dépolymérisation par rapport à la somme A)-E) avec une finesse ≤ 100 µm | | 0-75 % en poids |
| | | | |
| F. | des microparticules creuses, de préférence des matières synthétiques, remplies d'un gaz inerte, par rapport à la somme de A)-F) | | 0,1-50 % en poids. |

2. Article sanitaire selon la revendication 1,
**caractérisé en ce que**
le matériau de renforcement se compose d'une première et d'une seconde couche, la première couche ne pouvant être obtenue par durcissement d'un premier système de (méth)acrylate réactif, durcissant à froid, polymérisable, projeté sur le côté arrière de la pièce moulée en verre acrylique, qui contient
| | | | |
|---|---|---|---|
| A. | a | (méth)acrylate | 30-100 % en poids |
| | | a1) (méth)acrylate de méthyle | 0-100 % en poids |
| | | a2 (méth)acrylate en C₂ à C₄ | 0-100 % en poids |
| | | a3 (méth)acrylate ≥ C₅ | 10-50 % en poids |
| | | a4 (méth)acrylates polyvalents | 0-50 % en poids |
| | b | Comonomères | 0-50 % en poids |
| | | b1 Aromates vinyliques | 0-30 % en poids |
| | | b2 Esters vinyliques | 0-30 % en poids |
| B. | pour 1 partie en poids de A) 0,05 -5 % en poids d'un (pré)polymère soluble ou gonflable dans A) | | |
| C. | un système redox à maintenir entièrement ou partiellement séparé des constituants du système qui polymérise, et qui contient un accélérateur et un catalyseur ou initiateur comportant un peroxyde, en une quantité suffisant pour le durcissement à froid du composant A), | | |
| D. | des additifs habituels, | | |
| E. | des charges inertes dans les conditions de la dépolymérisation du verre acrylique par rapport à la somme A)-E) avec une finesse ≤ 100 µm | | 0-75 % en poids |
| F. | des microparticules creuses, de préférence des matières synthétiques, remplies d'un gaz inerte, par rapport à la somme de A)-F) | | 0,1-50 % en poids, |
et la seconde couche peut être obtenue par durcissement d'un second système de (méth)acrylate réactif, durcissant à froid, polymérisable, pulvérisé sur la première couche, qui est différent du premier système de (méth)acrylate, sur le second système de (méth)acrylate jusqu'au composant A3), c'est-à-dire jusqu'à une teneur en (méth)acrylate ≥ C5 qui s'élève à 0 à moins de 10 % en poids, et jusqu'au composant F), qui par rapport à la somme A)-F) est présent en une quantité de 0 à 50 % en poids, et répond à cette même définition générale que le premier système de (méth)acrylate.

3. Article sanitaire selon la revendication 1 ou 2,
**caractérisé en ce que**
la charge F) se compose de microbilles de matière synthétique expansée remplie de gaz.

4. Article sanitaire selon la revendication 3,
**caractérisé en ce que**
les microbilles creuses sont revêtues de carbonate de calcium.

5. Article sanitaire selon une ou plusieurs des revendications précédentes,
**caractérisé en ce que**
la charge F) est contenue dans le système de (méth)acrylate ou dans le premier et/ou le second système de (méth)acrylate en une quantité allant de 1 à 25 % en poids, par rapport au poids de la somme des constituants A) à F).

6. Article sanitaire selon une ou plusieurs des revendications 1 à 4 précédentes,
**caractérisé en ce que**
la charge F) est contenue dans le système de (méth)acrylate et/ou le second système de (méth)acrylate en une quantité allant de 2 à 15 % en poids, par rapport au poids de la somme des constituants A) à F).

7. Article sanitaire selon une ou plusieurs des revendications 1 à 4,
**caractérisé en ce que**
la charge F) est contenue dans le système de (méth)acrylate et dans le premier et/ou le second système de (méth)acrylate en une quantité allant de 3 à 10 % en poids, par rapport au poids de la somme des constituants A) à F).

8. Article sanitaire selon la revendication 1 ou 2,
**caractérisé en ce que**
la charge E) est constitué de mica, d'hydroxyde d'aluminium, de carbonate de calcium, de craie, de marbre, de quartzite, de wollastonite et/ou de cristoballite.

9. Article sanitaire selon la revendication 1,
**caractérisé en ce que**
la charge E) dans le système de (méth)acrylate est du mica.

10. Article sanitaire selon la revendication 2,
**caractérisé en ce que**
la charge E) dans le premier et le second système de (méth)acrylate est le mica.

11. Article sanitaire selon une ou plusieurs des revendications précédentes,
**caractérisé en ce que**
la charge E) dans le système de (méth)acrylate ou dans le premier et/ou le second système de (méth)acrylate est contenue en une quantité de 40 à 65 % en poids, de préférence de 50 à 60 % en poids, par rapport à la somme de A)-E).

12. Article sanitaire selon une ou plusieurs des revendications précédentes,
**caractérisé en ce que**
le ou les systèmes de (méth)acrylates présentent les composants B):A) dans un rapport pondéral allant de 0,1:1 à 2:1.

13. Article sanitaire selon la revendication 12,
**caractérisé en ce que**
le rapport pondéral de B):A) est dans un intervalle de 0,2:1 à 1:1.

14. Article sanitaire selon l'une des revendications précédentes,
**caractérisé en ce que**
B) est une perle de vernis de PPMA que l'on peut obtenir par une polymérisation en suspension, un polymère en émulsion et/ou un produit de broyage provenant d'un processus de recyclage avec une taille particulaire moyenne allant jusqu'à 0,8 mm.

15. Article sanitaire selon la revendication 14 dans la mesure où elle se réfère à la revendication 2 ou à une revendication qui s'y rapporte,
**caractérisé en ce que**
le prépolymère B) de la première couche de renforcement présente une teneur en comonomère comprise entre 30 et 80 % en poids, celui de la seconde couche de renforcement entre 0 et moins de 30 % en poids.

16. Article sanitaire selon la revendication 15,
**caractérisé en ce que**
le comonomère et l'acrylate de méthyle, l'acrylate d'éthyle, l'acrylate de butyle, l'acrylate de 2-éthylhexyle, le méthacrylate d'éthyle, le méthacrylate de n-butyle, le méthacrylate de i-butyle, le méthacrylate de 2-éthylhexyle, l'acrylate de propyle, le méthacrylate de propyle, l'acide méthacrylique, le méthacrylate d'éthyl triglycol et/ou le méthacrylate d'hydroxypropyle.

17. Article sanitaire selon une ou plusieurs des revendications précédentes,
**caractérisé en ce qu'**
on trouve dans le système de méthacrylate ou dans le premier et le second système de méthacrylate, par rapport à une partie en poids de E) ou de F), jusqu'à 0,5 partie d'agent de thixotropisation.

18. Article sanitaire selon une ou plusieurs des revendications précédentes,
**caractérisé en ce qu'**
en cas de présence de deux couches de renforcement, la première couche présente une épaisseur de 0,5 à 2,5 mm et la seconde couche une épaisseur allant de 2,5 à moins de 5,5 mm.

19. Procédé de fabrication d'un article sanitaire renforcé par l'arrière, dépourvu de fibres de verre et d'amiante selon les revendications 1 à 18, dans lequel au moins un système de résine réactif est pulvérisé sur le côté arrière d'un article moulé en verre acrylique, le système de résine durcissant en contact avec l'article moulé en verre acrylique et se liant ainsi avec l'article moulé en verre acrylique,
**caractérisé en ce qu'**
on utilise un système de résine à base de (méth)acrylates, qui est durci en un polymère ayant une température de transition vitreuse Tg > 70°C et présente, par rapport à une partie en poids du système de résine considéré, jusqu'à 2,33 parties en poids de telles charges, qui dans les conditions de la dépolymérisation de l'article moulé en verre acrylique sont inertes, le système de (méth)acrylate présentant la composition indiquée dans la revendication 1.

20. Procédé selon la revendication 19,
**caractérisé en ce qu'**
on utilise deux systèmes de résine différant l'un de l'autre, principalement à base de (méth)acrylates, qui durcissent respectivement en un polymère ayant une température de transition vitreuse Tg > 70°C et par rapport à une partie en poids du système de résine considéré peuvent présenter jusqu'à 2,33 parties en poids de telles charges, qui sont inertes dans les conditions de la dépolymérisation de l'article moulé en verre acrylique, où l'on pulvérise tout d'abord sur l'article moulé en verre acrylique un premier système de résines qui confèrent la résilience nécessaire, et après son durcissement on pulvérise un second système de résine qui confère la rigidité nécessaire.

21. Procédé selon la revendication 20,
**caractérisé en ce qu'**
on utilise comme premier système de résines un système de (méth)acrylate réactif durcissant à froid polymérisable qui contient
| | | | |
|---|---|---|---|
| A. | a) | (méth)acrylate | 30-100 % en poids |
| | | a1) (méth)acrylate de méthyle | 0-100 % en poids |
| | | a2) (méth)acrylate en C₂ à C₄ | 0-100 % en poids |
| | | a3) (méth)acrylate ≥ C₅ | 10-50 % en poids |
| | | a4) (méth)acrylates polyvalents | 0-50 % en poids |
| | b) | Comonomères | 0-50 % en poids |
| | | b1) Aromates vinyliques | 0-30 % en poids |
| | | b2) Esters vinyliques | 0-30 % en poids |
| B. | pour une partie en poids de A) 0,05 -5 % en poids d'un (pré)polymère soluble ou gonflable dans A) | | |
| C. | un système redox à maintenir entièrement ou partiellement séparé des constituants du système qui polymérise, et qui contient un accélérateur et un catalyseur ou initiateur comportant un peroxyde, en une quantité suffisant pour le durcissement à froid du composant A), | | |
| D. | des additifs habituels, | | |
| E. | des charges inertes dans les conditions de la dépolymérisation par rapport à la somme A)-E) avec une finesse ≤ 100 µm | | 0-75 % en poids |
| F. | des microparticules creuses, de préférence des matières synthétiques, remplies d'un gaz inerte, par rapport à la somme de A)-F) | | 0,1-50 % en poids. |

22. Procédé selon la revendication 20 ou 21,
**caractérisé en ce qu'**
on utilise comme second système de résine un système de (méth)acrylate réactif, durcissant à froid, polymérisable, projeté sur le côté arrière de la pièce moulée en verre acrylique, qui contient
| | | | |
|---|---|---|---|
| A. | a) | (méth)acrylate | 30-100 % en poids |
| | | a1) (méth)acrylate de méthyle | 0-100 % en poids |
| | | a2) (méth)acrylate en C₂ à C₄ | 0-100 % en poids |
| | | a3) (méth)acrylate ≥ C₅ | 0-<10 % en poids |
| | | a4) (méth)acrylates polyvalents | 0-50 % en poids |
| | b) | Comonomères | 0-50 % en poids |
| | | b1) Aromates vinyliques | 0-30 % en poids |
| | | b2) Esters vinyliques | 0-30 % en poids |
| B. | pour une partie en poids de A) 0,05 -5 % en poids d'un (pré)polymère soluble ou gonflable dans A) | | |
| C. | un système redox à maintenir entièrement ou partiellement séparé des constituants du système qui polymérise, et qui contient un accélérateur et un catalyseur ou initiateur comportant un peroxyde, en une quantité suffisant pour le durcissement à froid du composant A), | | |
| D. | des additifs habituels, | | |
| E. | des charges inertes dans les conditions de la dépolymérisation du verre acrylique par rapport à la somme A)-E) avec une finesse ≤ 100 µm | | 0-75 % en poids |
| F. | des microparticules creuses, de préférence des matières synthétiques, remplies d'un gaz inerte, par rapport à la somme de A)-F) | | 0-50 % en poids. |

23. Procédé selon la revendication 21 ou 22,
**caractérisé en ce que**
les charges E) sont intégrées avant l'utilisation des systèmes réactifs avec un agrégat d'homogénéisation et addition d'un agent de thixotropie en une quantité de 0,01-0,5 partie par rapport à une partie de E) dans le premier et/ou le second système du liant considéré A)-D).

24. Procédé selon les revendications 21-23,
**caractérisé en ce qu'**
on utilise comme charges E) l'hydroxyde d'aluminium, les carbonates de calcium comme la craie ou le marbre, le spath pesant et/ou une quartzite comme la wollastonite, la cristobalite, les silicates amorphes, les cendres volantes et/ou le mica.

25. Procédé selon la revendication 22 ou 23,
**caractérisé en ce qu'**
on utilise comme charge E) du mica.

26. Procédé selon une ou plusieurs des revendications 20 à 25,
**caractérisé en ce qu'**
on pulvérise des systèmes de résine successivement sur le côté arrière de la pièce moulée en verre acrylique, où dans la pulvérisation on mélange toujours entre eux deux courants de matériaux et où le premier des courants de matériaux présente les constituants polymérisables du mélange de résine et un second courant de matériau les constituants du composant C) à maintenir séparé du constituant polymérisable du système de résine jusqu'à la polymérisation.
